# FASCICULE DE BREVET EUROPEEN

(11) **EP 4 547 560 B1**
(45) Date de publication et mention de la délivrance du brevet: **18.06.2025**
(21) Numéro de dépôt: 24729887.0
(22) Date de dépôt: 03.05.2024
(51) Int. Cl.: B64G 1/22, B64G 1/66

(54) **ECRAN DÉPLOYABLE POUR TÉLESCOPE SPATIAL**
ENTFALTBARER SCHIRM FÜR EIN WELTRAUMTELESKOP
DEPLOYABLE SCREEN FOR SPACE TELESCOPE

(30) Priorité: 26.05.2023 FR 2305210
(43) Date de publication de la demande: 07.05.2025
(73) Titulaire: Airbus Defence and Space SAS, 31402 Toulouse Cedex 4 (FR)
(72) Inventeur: CHIRI, Arnaud, 31402 TOULOUSE CEDEX 4 (FR)
(74) Mandataire: Plasseraud IP
(86) Numéro de dépôt international: PCT/FR2024/050579
(87) Numéro de publication internationale: WO 2024/246440

(56) Documents cités:
- EP-A1- 2 520 494
- IT-A1- 201800 010 824
- US-A- 5 787 671
- US-A1- 2005 022 465
- US-A1- 2012 267 482
- US-B1- 6 313 811

## Description

### Domaine technique

La présente divulgation relève du domaine de la protection des instruments optiques et plus particulièrement de la protection des équipements optiques d'observation spatiale, typiquement dans un télescope spatial ou dans un satellite d'observation de la Terre.

### Technique antérieure

Les engins spatiaux, par exemple une sonde d'exploration ou un satellite d'observation de la Terre, peuvent généralement inclure des équipements spatiaux (tels que les télescopes spatiaux), qui peuvent comprendre des composants (e.g., des miroirs) - vulnérables aux illuminations, provenant directement du Soleil et/ou de réflexions lumineuses (e.g., réflexions de la lumière sur la Lune ou la Terre). Il est donc connu, dans le domaine spatial, d'utiliser des dispositifs de type écrans de protection embarqués sur les engins spatiaux afin de protéger les équipements spatiaux embarqués lors des phases d'observations, par exemple, lorsque l'engin spatial est en orbite.

L'utilisation de tels écrans de protection est soumise à de nombreuses contraintes structurelles et fonctionnelles imposées par le contexte spatial. Tout d'abord, la phase de lancement de l'engin spatial, pour sa mise en orbite par un lanceur, impose un volume et une masse au lancement limités, notamment dans la limite des dimensions de la coiffe du lanceur de l'équipement spatial. De tels écrans de protection doivent donc présenter des structures compactes et des masses adaptées pour être embarqués lors du lancement. Un gain de masse et un gain de volume sont particulièrement recherchés pour des raisons de coûts (notamment énergétiques) de mise en orbite et de choix du lanceur. De plus, un gain de masse en orbite peut également être recherché car cela limite l'inertie du satellite et augmente, par conséquent, son agilité.

Le document US2015/0146288 déposé au nom de UTAH STATE UNIVERSITY RESEARCH FOUNDATION enseigne un télescope déployé en pétales qui comprend un équipement spatial incluant un écran en demi-cylindre dans lequel se déploient en partie les pétales et s'étendant au-delà d'un miroir secondaire déployé. Un tel équipement spatial, une fois en orbite, requiert que l'écran de protection soit constamment placé entre la source lumineuse parasite et l'équipement spatial, notamment lorsque l'orientation de l'engin spatial change, par exemple lors de son passage à l'équateur, notamment dans le cas d'orbite terrestre héliosynchrone. Ainsi, l'engin spatial effectue généralement des manœuvres d'orientation, dites « flip», afin d'orienter l'écran de protection vers la source lumineuse. Ces manœuvres constituent cependant des pertes de temps opérationnel pour l'engin spatial et en particulier pour l'équipement spatial (e.g., un télescope spatial n'acquiert pas d'images pendant de telles manœuvres d'orientation). Une telle manœuvre d'orientation d'un écran de protection d'un engin spatial est ainsi une contrainte opérationnelle de l'engin spatial. De plus, de telles manœuvres d'orientation sont prévues les plus rapides possibles, afin que l'équipement spatial puisse être à nouveau rapidement opérationnel. Il est alors attendu que l'écran de protection solaire présente une rigidité et un amortissement suffisants lors de telles phases d'orientation.

Le brevet EP2520494 déposé au nom de THALES enseigne un dispositif de protection d'un équipement optique multifaisceaux. Le dispositif de protection s'étendant au-delà d'un miroir secondaire se déploie latéralement pour venir recouvrir des miroirs principaux. Le document US 2012/267482 A1 divulgue un écran de protection déployable pour un équipement optique spatial.

Il apparaît un besoin d'améliorer les dispositifs de protection d'équipements spatiaux existants et notamment d'améliorer leur compacité tout en conservant de bonnes performances lors de leur utilisation dans le contexte spatial.

### Résumé

La présente invention vise à pallier les inconvénients de l'art antérieur en proposant un écran de protection déployable pour équipement spatial, notamment pour un équipement spatial déployable.

Pour cela, il est proposé un écran de protection solaire déployable pour un équipement spatial, présentant au moins une zone d'attache à une plateforme d'un engin spatial incluant ledit équipement spatial, ledit écran étant configuré pour passer d'une configuration stockée à une configuration déployée en orbite et caractérisé en ce qu'il comprend :
-- des tiges,
-- des liaisons rotatives joignant des tiges entre elles, les liaisons rotatives étant du type liaison rotative active stockant une quantité d'énergie ou du type liaison rotative passive, les tiges étant recouvertes par un film thermiquement isolant plié lorsque l'écran est en configuration stockée et tendu entre les tiges lorsque l'écran est en configuration déployée,
dans lequel les tiges sont constituées par au moins :
-- des premières tiges structurelles, formant une base structurelle périphérique en configuration stockée ainsi qu'en configuration déployée,
-- des deuxièmes tiges d'extension radiale, reliées entre elles au moins par paires pour former des ensembles de deuxièmes tiges, chaque ensemble de deuxièmes tiges reliant deux premières tiges consécutives et étant configuré pour déployer l'écran selon une direction radiale,
-- des troisièmes tiges d'extension axiale, reliées entre elles au moins par paires pour former des ensembles de troisièmes tiges, chaque ensemble de troisièmes tiges reliant deux premières tiges consécutives et étant configuré pour déployer l'écran selon une direction axiale et
-- chaque ensemble de deuxièmes tiges ou troisièmes tiges comprenant au moins une liaison rotative active,
lesdits ensembles de deuxièmes tiges et troisièmes tiges étant repliés lorsque l'écran est en configuration stockée, les liaisons rotatives actives étant configurées pour déplier lesdits ensemble de deuxièmes tiges et troisièmes tiges et déclencher le passage de la configuration stockée à la configuration déployée, en entraînant la rotation des liaisons rotatives passives et un déploiement dans une direction axiale et dans une direction radiale.

Avantageusement, l'écran de protection proposé présente une configuration stockée particulièrement compacte et permet un gain en volume et en masse particulièrement avantageux lors de la phase de lancement de l'engin spatial. Notamment, un déploiement de l'écran à la fois dans la direction axiale et dans la direction radiale permet d'optimiser davantage la compacité de l'écran.

De plus, l'écran de protection proposé permet, tout en conservant une masse réduite et une compacité, notamment au lancement, une protection à 360 degrés autour de l'équipement spatial, par un déploiement à la fois radial et axial, ce qui permet à l'engin spatial de s'affranchir des manœuvres d'orientation dites de « flip » : un tel écran de protection assure alors à l'équipement spatial une continuité opérationnelle. Notamment, dans le cas de télescopes spatiaux présentant un miroir principal déployable en pétales et un miroir secondaire également déployable, l'écran de protection proposé permet d'entourer entièrement le télescope, quelle que soit l'orientation de l'engin spatial dans l'espace.

Par ailleurs, l'écran de protection proposé permet avantageusement d'obtenir une structure simple, pouvant être déployée par des moyens mécaniques, sans requérir des moyens motorisés, via l'énergie stockée dans les liaisons rotatives actives, le déploiement de l'écran étant induit par des mouvements rotatifs mécaniques des tiges via les liaisons rotatives reliant les tiges. De plus, la structure d'un tel écran de protection permet une raideur de l'écran une fois déployée, notamment une fois les paires de deuxièmes et troisièmes tiges dépliées.

Les caractéristiques exposées dans les paragraphes suivants peuvent, optionnellement, être mises en œuvre, indépendamment les unes des autres ou en combinaison les unes avec les autres :

Dans un exemple de réalisation, les premières tiges sont réparties par étages selon la direction axiale, chaque étage comprenant un même nombre de premières tiges, supérieur ou égal à trois.

Par conséquent, la répartition des premières tiges en étage permet d'assurer une structure périphérique en hauteur de l'écran. Par ailleurs, une telle structure est facilement modulable, par exemple en faisant varier le nombre d'étages prévus pour l'écran, en fonction par exemple des dimensions de l'équipement spatial à protéger.

Dans un exemple de réalisation, l'écran présentant au moins trois étages distincts, dans lequel lesdits étages sont écartés les uns des autres par les troisièmes tiges lors du déploiement de l'écran selon la direction axiale.

Dans un exemple de réalisation, à chaque étage, deux premières tiges consécutives sont reliées par lesdits ensembles de deuxièmes tiges, tandis que deux premières tiges de deux étages successifs sont reliées par lesdits ensembles de troisièmes tiges.

Dans un exemple de réalisation, dans la configuration déployée, les premières tiges et les deuxièmes tiges d'un même étage forment une structure polygonale plane, cette structure polygonale plane étant présente à plusieurs des étages.

Par conséquent, chaque étage de l'écran présente avantageusement une structure régulière, ce qui facilite son déploiement autant dans la direction axiale que dans la direction radiale. Chaque étage étant formé par des premières et deuxièmes tiges et des troisièmes tiges reliant deux étages successifs, le déploiement de l'écran et de sa structure en étages superposés découlent directement du déploiement des deuxièmes et troisièmes tiges.

Avantageusement, le volume et la structure de l'écran peuvent être facilement anticipés ou prévus à partir des dimensions, de la disposition et/ou du nombre de tiges. Par exemple, lorsque les troisièmes tiges ont la même longueur, un même étage peut présenter une structure polygonale plane. A contrario, si certaines troisièmes tiges sont plus hautes que d'autres, un étage et notamment le dernier étage, peut présenter une structure non plane, qui peut être adaptée à certains besoins spécifiques.

Dans un exemple de réalisation, dans la configuration déployée, les étages s'étendent parallèlement à un même plan.

Dans un exemple de réalisation, la zone d'attache à la plateforme de l'engin spatial comprend des liaisons rotatives reliées à des ensembles de troisièmes tiges, lesdits ensembles de troisièmes tiges reliant des premières tiges à des premières tiges d'attache en contact avec ladite plateforme.

Dans un exemple de réalisation, les liaisons rotatives sont disposées exclusivement aux extrémités des tiges.

Par conséquent, le déploiement des tiges les unes par rapport aux autres est entraîné par la rotation des liaisons rotatives en leurs extrémités.

Dans un exemple de réalisation, dans la configuration stockée et dans la configuration déployée, les tiges sont disposées pour former une structure fermée selon la direction radiale apte à entourer l'équipement spatial.

Dans un exemple de réalisation, un volume formé par ladite structure fermée augmente à la fois lorsque l'écran est déployé selon la direction radiale et lorsque l'écran est déployé selon la direction axiale.

Par exemple, l'écran peut inclure une forme de prisme, dont le volume augmente latéralement lors du déploiement radial de l'écran (par exemple, les faces latérales du prisme s'écartent) et longitudinalement lors du déploiement axial de l'écran (par exemple les bases du prisme formées par les deux étages extrêmes de l'écran s'écartent).

Dans un exemple de réalisation, les deuxièmes tiges et les troisièmes tiges sont reliées respectivement par paires, et :
- dans la configuration stockée, les deux troisièmes tiges de chacune des paires de troisièmes tiges forment un même premier angle et les deux deuxièmes tiges de chacune des paires de deuxièmes tiges forment un même deuxième angle, lesdits premier et deuxième angles étant compris entre 0 et 180 degrés, et
- dans la configuration déployée, les deux troisièmes tiges de chacune des paires de troisièmes tiges s'étendent parallèlement à la direction axiale et les deux deuxièmes tiges de chacune des paires de deuxièmes tiges s'étendent parallèlement à un même plan.

Par conséquent, l'écran de protection présente par exemple une structure régulière. Notamment dans la configuration déployée, l'ensemble des troisièmes tiges peuvent être droites et alignées, parallèles à la direction axiale.

Dans un exemple de réalisation, au moins une liaison rotative passive comprend au moins deux liaisons pivots distinctes reliant au moins trois tiges parmi les premières tiges, les deuxièmes tiges et les troisièmes tiges.

Dans un exemple de réalisation, la liaison rotative active reliant lesdites paires de deuxièmes tiges et troisièmes tiges comprend au moins un élément parmi au moins :
- des bandes métalliques, de type mètre-rubans métalliques, formant un rail de part et d'autre des tiges de chacune desdites paires de deuxièmes tiges et troisièmes tiges,
- un ressort de torsion, ou
- un moteur.

Avantageusement, lorsque les liaisons actives sont réalisées par des bandes métalliques de type mètres-rubans, la rigidité des mètre-rubans une fois déplié confère directement la raideur des liaisons rotatives actives et donc de l'écran, assurant ainsi la tenue de l'écran vis-à-vis du flambage mécanique.

Dans un exemple de réalisation, l'énergie stockée est liée à une torsion ou une flexion des liaisons rotatives actives dans la configuration stockée et lesdites liaisons rotatives actives atteignent une position d'équilibre lorsque l'écran est dans la configuration déployée.

Par conséquent, la configuration stockée de l'écran peut être adoptée par flexion ou torsion des éléments formant la liaison rotative active. Notamment la quantité d'énergie stockée dans les liaisons rotatives actives peut dépendre de contraintes élastiques des bandes métalliques ou de raideur du ressort de torsion.

Par ailleurs, une fois la configuration déployée de l'écran atteinte, une position d'équilibre des éléments en torsion et/ou flexion formant les liaisons rotatives actives est atteinte. Notamment, une telle position d'équilibre est stable. L'écran ainsi déployé possède avantageusement une rigidité liée à des propriétés mécaniques des liaisons rotatives actives, ce qui permet de verrouiller la structure de l'écran une fois en configuration déployée.

Dans un exemple de réalisation, les liaisons rotatives actives des troisièmes tiges stockant une première quantité d'énergie et les liaisons rotatives actives des deuxièmes tiges stockant une deuxième quantité d'énergie, et dans lequel le passage de la configuration stockée à la configuration déployée est déclenché par une libération de la première quantité d'énergie et de la deuxième quantité d'énergie entraînant l'une des séquences de déploiement parmi :
- le déploiement de l'écran selon la direction axiale suivi du déploiement de l'écran selon la direction radiale,
- le déploiement de l'écran selon la direction radiale suivi du déploiement de l'écran selon la direction axiale, et
- le déploiement de l'écran selon la direction radiale et selon la direction axiale de façon concurrente,
en fonction au moins :
- d'une différence entre la première quantité d'énergie et la deuxième quantité d'énergie, et/ou
- d'un décalage temporel entre la libération de la première quantité d'énergie et de la deuxième quantité d'énergie.

Par conséquent, le déploiement de l'écran peut être maîtrisé en modulant les quantités d'énergie stockées par les différentes liaisons rotatives actives et/ou en différant la libération de ces quantités d'énergie. Autrement dit, l'écran proposé peut avantageusement être configuré pour être déployé selon les directions axiale et radiale de façon simultanée, synchronisée, successive ou différée. L'écran proposé peut alors avantageusement s'adapter au processus de déploiement de chaque équipement spatial.

Selon un autre aspect, il est proposé un système comprenant au moins un équipement spatial et un écran de protection déployable selon l'une quelconque des revendications précédentes.

Dans un exemple de réalisation, l'équipement spatial du système est un télescope déployable comprenant des pétales déployables formant au moins un miroir principal et un miroir secondaire déployables.

Dans un exemple de réalisation, le système comprend en outre un dispositif de maintien au lancement relié à des tiges de l'écran et configuré pour pouvoir se séparer des tiges pour permettre l'adoption par l'écran d'une configuration déployée par une libération d'une énergie stockée.

Dans un exemple de réalisation, le dispositif de maintien au lancement est relié à plusieurs premières tiges superposées dans une direction axiale.

### Brève description des dessins

**Fig. 1**

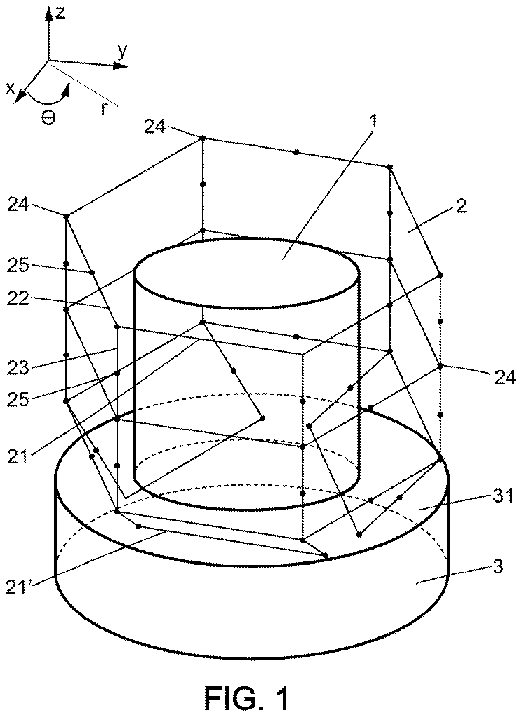

   [Fig. 1] représente une vue schématisée d'un système comprenant un écran de protection en configuration déployée selon un exemple de réalisation.
**Fig. 2**

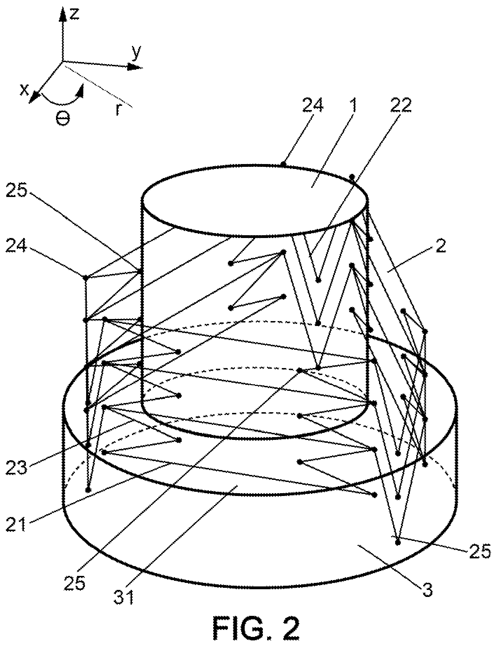

   [Fig. 2] représente une vue schématisée d'un système comprenant un écran de protection en configuration stockée selon un exemple de réalisation.
**Fig. 3**

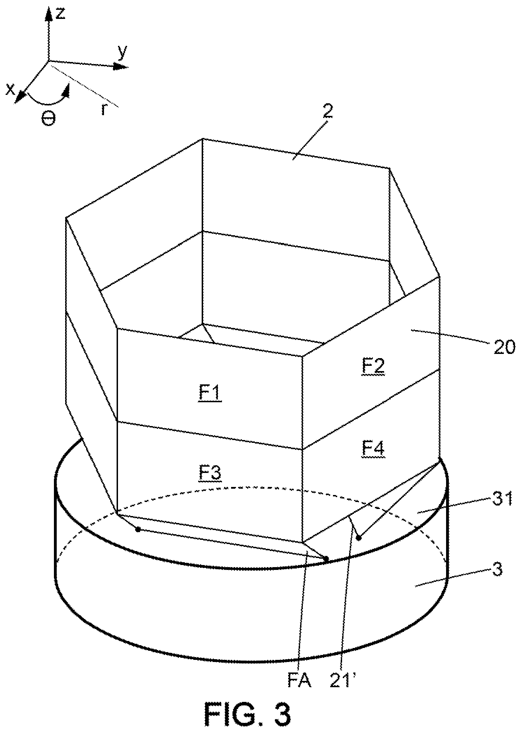

   [Fig. 3] représente une vue schématisée d'un écran de protection en configuration déployée selon un exemple de réalisation.
**Fig. 4**

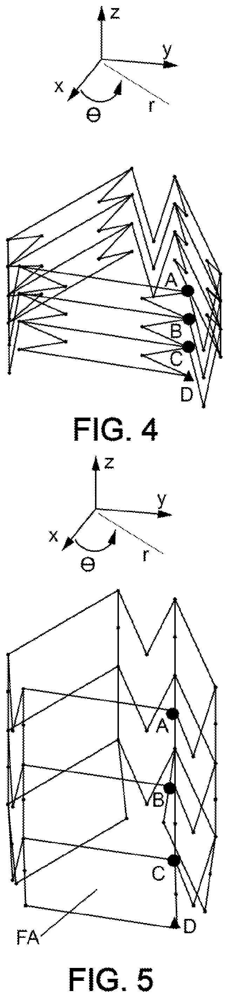

   [Fig. 4] représente un écran de protection en configuration stockée selon un exemple de réalisation.
**Fig. 5**
   [Fig. 5] représente un écran de protection en déploiement selon un exemple de réalisation.
**Fig. 6**

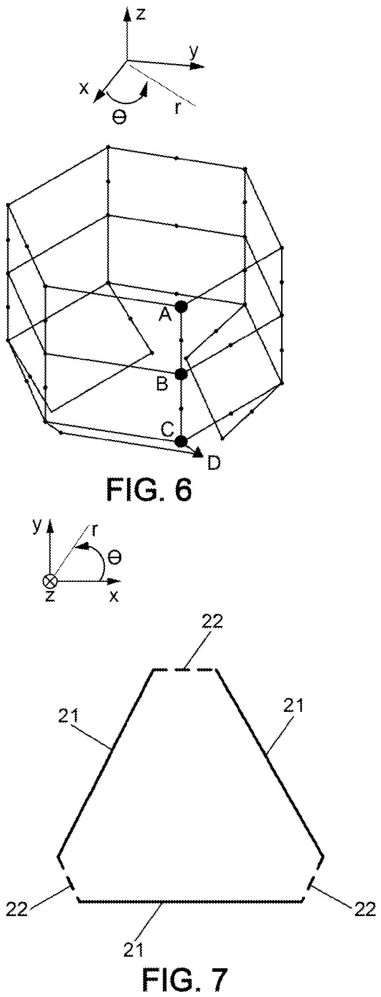

   [Fig. 6] représente un écran de protection en configuration déployée selon un exemple de réalisation.
**Fig. 7**
   [Fig. 7] représente une vue aérienne d'un écran de protection en configuration stockée selon un exemple de réalisation.
**Fig. 8**

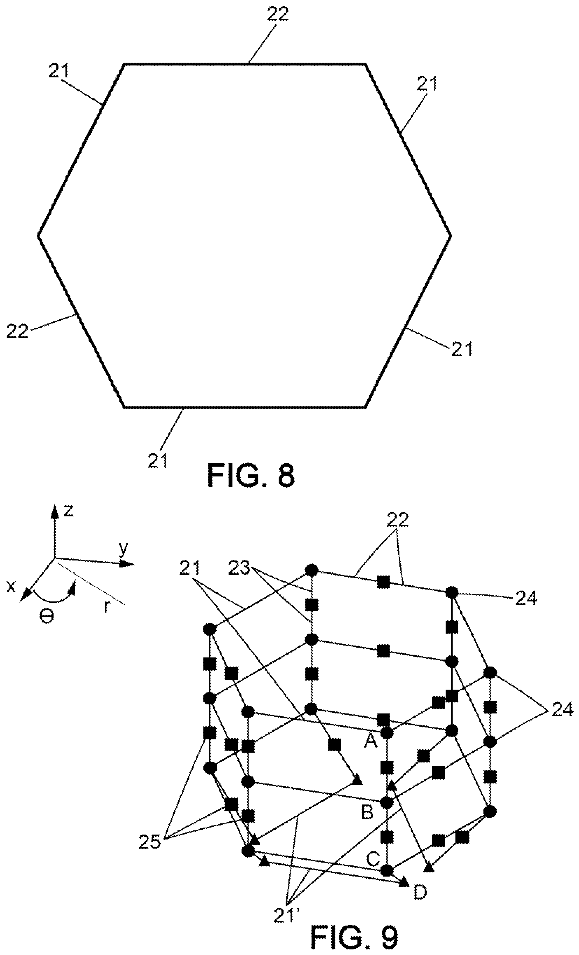

   [Fig. 8] représente une vue aérienne d'un écran de protection en configuration déployée selon un exemple de réalisation.
**Fig. 9**
   [Fig. 9] représente un emplacement de liaisons rotatives dans un écran de protection selon un exemple de réalisation.
**Fig. 10**

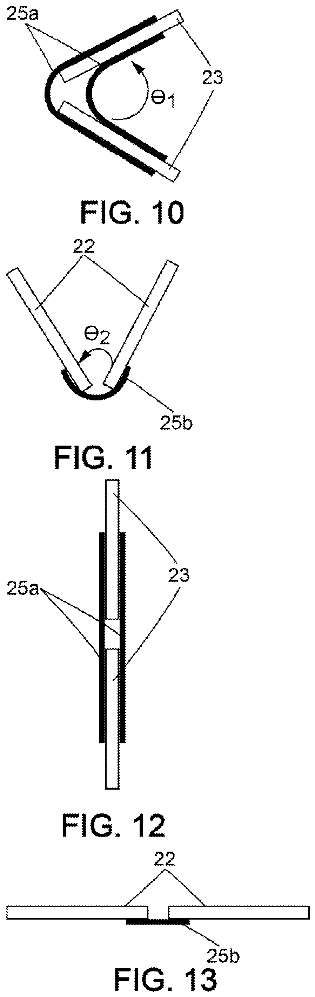

   [Fig. 10] représente une liaison rotative active d'un écran de protection en configuration stockée selon un exemple de réalisation.
**Fig. 11**
   [Fig. 11] représente une liaison rotative active d'un écran de protection en configuration stockée selon un autre exemple de réalisation.
**Fig. 12**
   [Fig. 12] représente une liaison rotative active d'un écran de protection en configuration déployée selon un exemple de réalisation.
**Fig. 13**
   [Fig. 13] représente une liaison rotative active d'un écran de protection en configuration déployée selon un autre exemple de réalisation.
**Fig. 14**

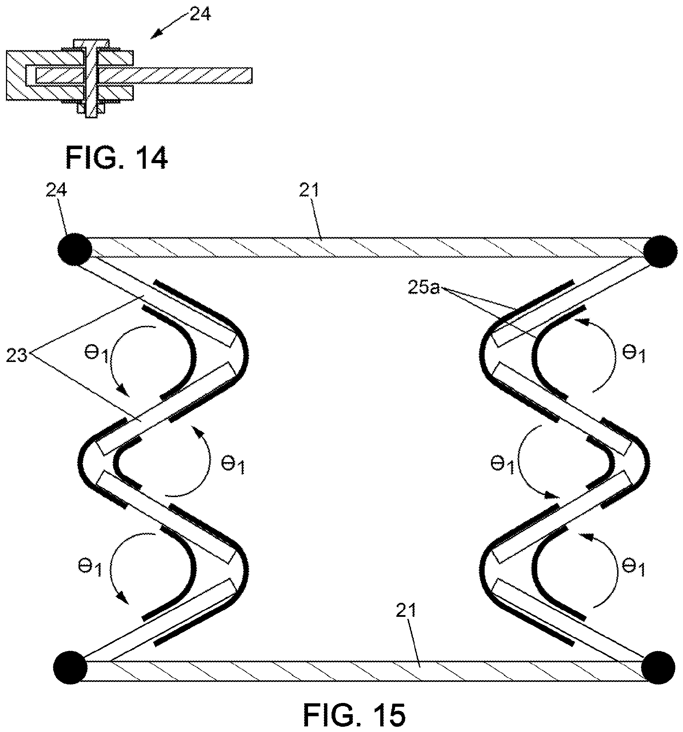

   [Fig. 14] représente une liaison rotative passive d'un écran de protection selon un exemple de réalisation.
**Fig. 15**
   [Fig. 15] représente des tiges et des liaisons rotatives formant un panneau d'un écran de protection en configuration stockée et configuré pour se déployer axialement selon un exemple de réalisation.
**Fig. 16**

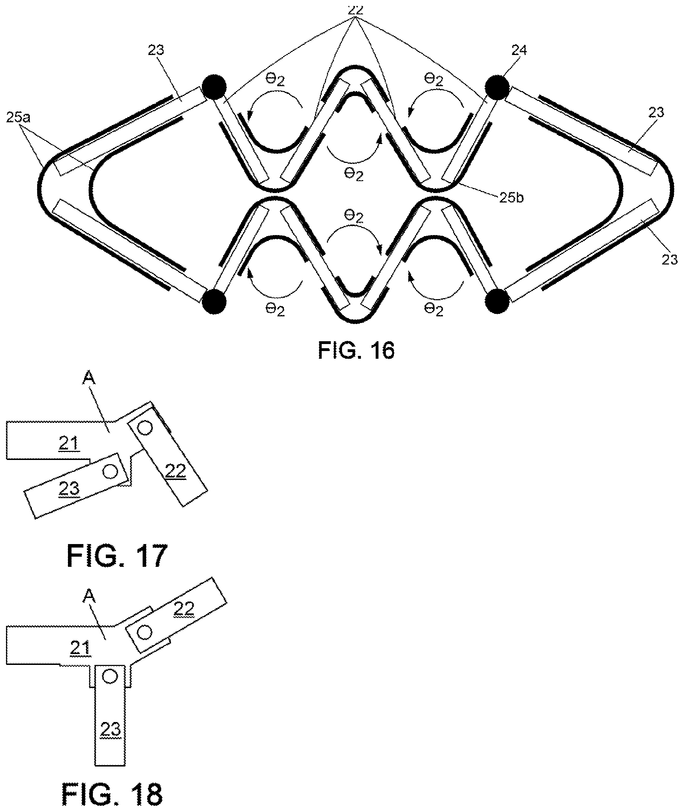

   [Fig. 16] représente des tiges et des liaisons rotatives formant un panneau d'un écran de protection en configuration stockée et configuré pour se déployer axialement et radialement selon un exemple de réalisation.
**Fig. 17**
   [Fig. 17] représente une liaison rotative passive en configuration stockée en un premier point de rotation selon un exemple de réalisation.
**Fig. 18**
   [Fig. 18] représente une liaison rotative passive en configuration déployée en un premier point de rotation selon un exemple de réalisation.
**Fig. 19**

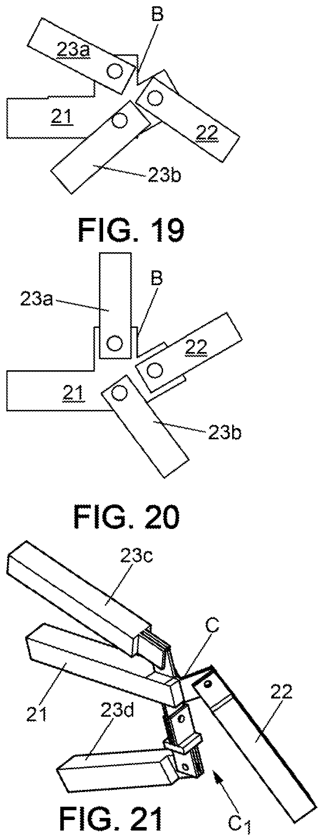

   [Fig. 19] représente une liaison rotative passive en configuration stockée en un deuxième point de rotation selon un exemple de réalisation.
**Fig. 20**
   [Fig. 20] représente une liaison rotative passive en configuration déployée en un deuxième point de rotation selon un exemple de réalisation.
**Fig. 21**
   [Fig. 21] représente une liaison rotative passive en configuration stockée en un troisième point de rotation selon un exemple de réalisation.
**Fig. 22**

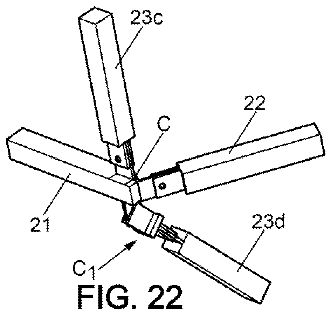

   [Fig. 22] représente une liaison rotative passive en configuration déployée en un troisième point de rotation selon un exemple de réalisation.

### Description des modes de réalisation

Il est maintenant fait référence à la figure 1. La figure 1 illustre schématiquement un système comprenant un écran de protection 2 et un équipement spatial 1 relié à un engin spatial 3 par l'intermédiaire d'une plateforme 31 de l'engin spatial 3.

Dans la suite de la description, le système est considéré dans un référentiel prédéfini et la cinématique de toute partie du système peut être considérée selon un système de coordonnées prédéfini associé au référentiel. Par exemple, le référentiel peut être défini par le système de coordonnées orthogonal (x,y,z) et/ou par des coordonnées polaires (r,Θ) et/ou sphériques. Les notions de déplacement, de vitesse ou encore de déploiement selon des directions données sont donc définies selon le système de coordonnées. Notamment, il peut être défini un axe de référence du système, pouvant par exemple correspondre à un axe selon lequel le système se déplace dans un mouvement rectiligne dans le référentiel. Dans le cadre de la présente description, l'axe de référence du système peut correspondre à l'axe z.

L'engin spatial 3 peut être un véhicule spatial avec ou sans équipage humain, configuré pour être lancé depuis la Terre dans l'espace à l'aide d'un lanceur, de sorte à être mis en orbite. L'engin spatial 3 peut être configuré pour remplir une ou plusieurs missions spatiales, par exemple des missions d'observation, de reconnaissance, de cartographie, de télécommunications etc. Un tel engin spatial 3 peut par exemple correspondre à une sonde spatiale ou encore à un satellite artificiel. Afin de permettre la lisibilité des figures, un tel engin spatial 3 est schématisé sur les figures comme ayant une forme cylindrique. Cependant, l'engin spatial peut adopter toute forme ou toute structure connue. L'engin spatial 3 comprend au moins une charge utile et une plateforme 31. La plateforme 31, pouvant également être désignée par bus ou module de service, peut regrouper un ensemble de dispositifs assurant une ou plusieurs fonctionnalités de service et/ou de support de l'engin spatial 3 telles que le pilotage de l'engin spatial, sa communication avec d'autres systèmes, sa propulsion ou encore le maintien structurel et le stockage de la charge utile. Une telle plateforme 31 peut également comprendre une zone d'accueil de la charge utile, par laquelle les éléments composant la charge utile peuvent être solidarisés à l'engin spatial 3. La charge utile de l'engin spatial 3 peut regrouper un ou plusieurs équipements spatiaux permettant de réaliser la mission spatiale. Un équipement spatial peut par exemple correspondre à un télescope spatial, un instrument d'observation, un équipement télécommunication ou encore un radar par exemple. Dans la suite de la description, il est considéré un équipement spatial (désigné par l'équipement spatial 1) compris dans la charge utile de l'engin spatial 3. Un tel équipement spatial 1 est schématisé sur les figures par une forme cylindrique. Dans d'autres exemples de réalisation, l'engin spatial 3 peut inclure de nombreux autres équipements spatiaux et de tels équipements spatiaux peuvent adopter toute forme ou toute structure connue.

L'équipement spatial 1 peut être configuré pour réaliser la mission spatiale, par exemple une fois l'engin spatial 3 mis en orbite. Pour cela, l'équipement spatial 1 peut comprendre un ou plusieurs composants permettant la mise en œuvre de la mission. Par exemple, l'équipement spatial peut comprendre des instruments optiques tels que des miroirs primaires et secondaires. Dans le contexte de la présente description, l'équipement spatial 1 peut par exemple être un télescope spatial comprenant des miroirs. Dans un exemple de réalisation, l'équipement spatial 1 peut être déployable, par exemple dans le cas d'un télescope spatial déployable. Un exemple de télescope déployable est illustré dans le document US2015/0146288. Le déploiement de l'équipement spatial 1 peut être commandé. Le déploiement de l'équipement spatial 1 peut être réversible ou non. Dans le cas d'un équipement spatial 1 pouvant être déployé, le volume occupé par l'équipement spatial 1 peut varier, parfois de façon considérable, selon si l'équipement spatial 1 est dans un état déployé ou non. Le volume occupé par l'équipement replié puis déployé peut par exemple varier d'un facteur 10. Le déploiement de l'équipement spatial 1 peut être compris comme le déploiement d'un ou de plusieurs de ses composants, comme dans le cas de miroirs déployables par exemple. Notamment, le volume occupé par l'équipement spatial 1 déployé peut être supérieur au volume occupé par l'équipement spatial 1 non déployé. Le déploiement de l'équipement spatial 1 peut être mis en œuvre selon une ou plusieurs directions. Par exemple, l'équipement spatial 1 peut se déployer selon une direction dite axiale, ou en hauteur, correspondant à la direction de référence z et/ou selon une direction dite radiale, ou en largeur, correspondant à un déploiement dans le plan (x,y) par exemple. Dans un autre exemple de réalisation, l'équipement spatial 1 peut être non déployable. Dans le cas d'un équipement spatial 1 non déployable, le volume occupé par l'équipement spatial 1 est sensiblement constant, sous réserve de possibles variations de volume dues à des phénomènes de dilatation et/ou de contraction de l'équipement spatial (ou de certains de ses composants) dans l'espace.

L'écran de protection 2, pouvant également être désigné par écran de protection solaire, bouclier de protection solaire ou encore plus simplement écran 2, correspond à une structure rattachée à l'engin spatial 3, par exemple via une zone d'attache à la plateforme 31 de l'engin spatial 3. L'écran 2 présente une structure adaptée pour protéger l'équipement spatial 1 des illuminations dans l'espace, notamment en provenance (directe ou indirecte, via des réflexions) du Soleil. Pour cela, l'écran 2 peut être positionné dans le référentiel de sorte à être interposé entre l'équipement spatial 1 et une source des illuminations (e.g., le Soleil). Notamment, l'écran 2 peut être disposé de sorte à entourer l'équipement spatial 1 autour de l'axe de référence z du système, comme représenté sur les figures 1 et 2. Autrement dit, l'écran 2 peut former une structure fermée autour de l'équipement spatial 1, s'étendant notamment autour de l'axe de référence z du système, dans le plan (x,y), dit plan radial (x,y). Une telle structure fermée peut également être désignée par structure fermée à 360 degrés (°), en ce qu'elle entoure intégralement une circonférence de l'équipement spatial 1. Une telle circonférence de l'équipement spatial 1 peut être comprise comme étant le périmètre d'une forme relativement circulaire délimitant approximativement la surface de l'équipement spatial 1, correspondant par exemple à la forme cylindrique représentant l'équipement spatial 1 sur les figures 1 et 2. La structure fermée de l'écran 2 peut donc entourer l'équipement spatial 1 à 360 degrés selon une direction dite radiale (r,Θ), correspondant à la direction dans laquelle s'étend le plan radial (x,y), comme représenté sur les figures 1 à 9.

Notamment, l'écran 2 est configuré pour être déployable, de sorte à passer d'une configuration stockée à une configuration déployée. Notamment, la configuration stockée de l'écran 2 peut être adoptée lors de la phase de lancement de l'engin spatial 3 et la configuration déployée de l'écran 2 peut être adoptée lorsque l'engin spatial 3 (et plus particulièrement l'équipement spatial 1) est en orbite. Le passage de l'écran 2 de la configuration stockée à la configuration déployée peut être déclenché de façon mécanique, électromécanique, électrique, électronique ou encore motorisé par exemple. Un tel passage de l'écran 2 entre la configuration stockée et la configuration déployée peut être irréversible (typiquement, dans le cas d'un déclenchement mécanique) ou réversible (typiquement, dans le cas d'un déclenchement motorisé). Le déclenchement du passage de l'écran 2 de la configuration stockée à la configuration déployée sera détaillé plus loin dans la description.

Le caractère déployable de l'écran 2 entraîne un changement de la forme et du volume occupé par l'écran 2 entre la configuration stockée et la configuration déployée. Notamment, le volume entouré par l'écran 2 pouvant être occupé par l'équipement spatial 1 s'agrandit lorsque l'écran 2 passe de la configuration stockée à la configuration déployée. Un tel caractère déployable de l'écran 2 est avantageusement adapté dans le cas particulier d'un équipement spatial 1 également déployable. En effet, le changement de volume lié au déploiement d'un télescope spatial 1 déployable peut être accompagné d'un changement de volume lié au déploiement de l'écran 2 protégeant un tel télescope 1, ce qui permet d'optimiser le volume occupé par l'ensemble formé par l'équipement spatial 1 et son écran de protection 2 à la fois lors de la phase de lancement de l'engin spatial 3 et lorsque l'engin spatial 3 est en orbite et opérationnel pour la réalisation la mission spatiale. À titre d'exemple, les figures 7 et 8 schématisent des exemples en vue aérienne (ou dans le plan radial (x,y)) d'un écran 2 en configuration stockée et configuration déployée respectivement. Les figures 7 et 8 schématisent un changement de volume possible délimité par la structure de l'écran 2 entre la configuration stockée et la configuration déployée. Dans d'autres exemples de réalisation, la différence de volume entre la configuration stockée et la configuration déployée de l'écran 2 peut différer de celles représentées sur les figures 7 et 8, selon les dimensions de l'équipement spatial 1 à protéger (notamment de ses dimensions au lancement et une fois en orbite) et/ou de la forme de l'écran 2 par exemple.

À titre d'exemple, les figures 1 à 8 illustrent des exemples d'un écran 2 de protection d'un équipement spatial 1 dans des configurations stockée ou déployée. Des exemples de configuration déployée de l'écran 2 sont illustrés sur les figures 1, 3, 6 et 8. Des exemples de configuration stockée de l'écran 2 sont illustrés sur les figures 2, 4 et 7. La figure 5 illustre un exemple de configuration intermédiaire de l'écran 2 en cours de déploiement pour passer de la configuration stockée de la figure 4 à la configuration déployée de la figure 6.

La structure de l'écran 2 de protection est à présent détaillée.

L'écran 2 comprend au moins une pluralité de tiges 21, 22, 23 jointes entre elles par des liaisons rotatives 24, 25, comme détaillé sur la figure 1 par exemple. La pluralité de tiges 21, 22, 23 peut être distinguées au moins en des premières tiges 21, des deuxièmes tiges 22 et des troisièmes tiges 23.

Les premières tiges 21 sont des tiges dites structurelles, qui forment une base structurelle périphérique de l'écran 2 en configuration stockée ainsi qu'en configuration déployée. Notamment, les premières tiges 21 ne contribuent pas directement au déploiement de l'écran 2. Autrement dit, les premières tiges ne se déplient pas selon une quelconque direction dans le référentiel de l'écran 2. Comme illustré sur les figures 7 et 8 par exemple, les premières tiges 21 ne se déplient pas entre la configuration stockée et la configuration déployée.

Les deuxièmes tiges 22 sont des tiges dites d'extension radiale, qui sont configurées pour déployer l'écran 2 selon une direction radiale (r,Θ) dans le référentiel de l'écran 2. Ainsi, si l'équipement spatial 1 peut être schématisé par un volume cylindrique, comme sur les figures 1 et 2, les deuxièmes tiges 22 permettent de déployer l'écran 2 selon le diamètre du cylindre. Comme illustré sur les figures 7 et 8 par exemple, les deuxièmes tiges 22 se déplient tangentiellement entre la configuration stockée et la configuration déployée, de sorte à écarter les premières tiges 21. Pour cela, les deuxièmes tiges 22 peuvent être reliées entre elles au moins par paires pour former des ensemble de deuxièmes tiges 22. Chaque ensemble de deuxièmes tiges 22 peut par exemple comprendre deux deuxièmes tiges 22, comme illustré sur les figures 1 à 6, 9, 11 et 13. En variante, chaque ensemble de deuxièmes tiges 22 peut comprendre plus de deux deuxièmes tiges 22, comme illustré sur la figure 16, sur laquelle chaque ensemble de deuxièmes tiges 22 comprend quatre deuxièmes tiges 22. Notamment, chaque ensemble de deuxièmes tiges 22 peut relier deux premières tiges 21 consécutives. Par exemple, en référence aux figures 7 et 8, des ensemble de deuxièmes tiges 22 sont intercalés entre deux premières tiges 21, de sorte qu'une vue aérienne de la structure périphérique de l'écran correspond à une structure fermée alternant des premières tiges 21 et des ensembles de deuxièmes tiges 22. Dans la configuration stockée, les ensembles de deuxièmes tiges 22 sont repliés, comme illustré sur la figure 2. Dans la configuration déployée, les ensemble de deuxièmes tiges 22 sont dépliés, de sorte que les ensembles de deuxièmes tiges 22 d'une part, et les premières tiges 21 d'autre part, sont coplanaires au plan radial (x,y). Le déploiement des ensembles de deuxièmes tiges 22 sera détaillé dans la suite de la description.

Les troisièmes tiges 23 sont des tiges dites d'extension axiale, qui sont configurées pour déployer l'écran 2 selon une direction axiale z dans le référentiel de l'écran 2. Une telle direction axiale z peut correspondre à la direction de référence z de l'équipement spatial 1. Ainsi, les troisièmes tiges 23 sont configurées pour mettre en œuvre un déploiement longitudinal de l'écran 2 selon l'axe de référence de l'équipement spatial 1. Ainsi, si l'équipement spatial 1 peut être schématisé par un volume cylindrique, comme sur les figures 1 et 2, les troisièmes tiges 23 permettent de déployer l'écran 2 selon la longueur ou hauteur du cylindre. Pour cela, les troisièmes tiges 23 peuvent être reliées entre elles au moins par paires pour former des ensemble de troisièmes tiges 23. Chaque ensemble de troisièmes tiges 23 peut par exemple comprendre deux troisièmes tiges 23, comme illustré sur les figures 1 à 6, 9, 10 et 12. En variante, chaque ensemble de troisièmes tiges 23 peut comprendre plus de deux troisièmes tiges 23, comme illustré sur la figure 15, sur laquelle chaque ensemble de troisièmes tiges 23 comprend quatre troisièmes tiges 23.

La pluralité de tiges 21, 22, 23 peut également comprendre des premières tiges d'attache 21' à l'engin spatial 3, comme illustré sur les figures 1 et 9 par exemple. À l'instar des premières tiges 21, les premières tiges d'attache 21' ne se déplient pas selon une quelconque direction dans le référentiel de l'écran 2 et notamment, les premières tiges d'attache 21' ne se déplient pas entre la configuration stockée et la configuration déployée.

Les premières tiges 21, les ensemble de deuxièmes tiges 22 et les ensemble de troisièmes tiges 23 peuvent être agencées entre eux de sorte à former une structure fermée de l'écran de protection 2 apte à entourer l'équipement spatial 1, à la fois en configuration stockée, en figure 2, et en configuration déployée, en figure 1.

Notamment, la pluralité des tiges 21, 22, 23 peut être agencée pour former un ou plusieurs étages, également désignés par niveaux, de l'écran 2. Par exemple, en référence aux figures 4, 5 et 6, les points repères A, B, C appartiennent à des étages distincts. Notamment, chaque étage de l'écran 2 en configuration déployée peut correspondre à un ensemble de tiges coplanaires, parallèle au plan radial (x,y). Chaque étage de l'écran 2 peut être formé d'une part, par des premières tiges 21 et, d'autre part, par des ensembles de deuxièmes tiges 22. Notamment, les premières tiges 21 et les ensembles de deuxièmes tiges 22 de chaque étage de l'écran 2 sont disposées bout à bout au niveau de leurs extrémités de sorte à former une structure fermée, comme illustré sur les figures 7 et 8. Notamment, un étage peut être composé d'une alternance de premières tiges 21 et d'ensembles de deuxièmes tiges 22. Par exemple, en référence aux figures 1 à 6, l'écran 2 représenté comprend trois étages distincts. Le déploiement de l'écran 2 de la configuration stockée à la configuration déployée inclut une extension des ensembles de deuxièmes tiges 22 au niveau de chaque étage. Ainsi, le déploiement de l'écran 2 selon une direction radiale (r,Θ) est mis en œuvre par une extension radiale des ensembles de deuxièmes tiges 22 au niveau de chaque étage. Pour cela, dans la configuration stockée, les premières tiges 21 peuvent rester coplanaires au plan radial (x,y) tandis que les ensembles de deuxièmes tiges 22 peuvent appartenir à des plans sécants ou obliques par rapport au plan radial (x,y). Notamment, en configuration stockée, les deuxièmes tiges 22 de chaque ensemble de deuxièmes tiges 22 peuvent, deux à deux, former un deuxième angle Θ₂ non plat, comme détaillé sur les figures 11 et 16. Ainsi, en référence à la figure 7, les deuxièmes tiges 22 représentées en pointillés indiquent que les deuxièmes tiges 22 ne sont pas dans le même plan (x,y) que les premières tiges 21 dans la configuration stockée. Lors du déploiement vers la configuration déployée, les deuxièmes tiges 22 se déplient progressivement, comme illustré sur la figure 5, de sorte qu'un tel deuxième angle Θ₂ augmente jusqu'à devenir un angle plat (de 180 degrés) lorsque les deuxièmes tiges 22 sont sensiblement alignées et coplanaires aux premières tiges 21, comme illustré sur les figures 6 et 13. Ainsi, en référence à la figure 8, les deuxièmes tiges 22 représentées en traits pleins indiquent que les deuxièmes tiges 22 sont dans le même plan (x,y) que les premières tiges 21 dans la configuration déployée.

En référence aux figures 1 à 8, la pluralité de tiges 21, 22, 23 est disposée de sorte qu'une structure polygonale régulière plane est formée par chaque étage de l'écran 2 déployé, à titre d'exemple. Dans de tels exemples, chaque étage est similaire et est composé de trois premières tiges 21 et de trois ensembles de deuxièmes tiges 22. Chaque ensemble de deuxièmes tiges 22 comprend deux deuxièmes tiges 22. En configuration déployée, chaque étage présente donc une forme hexagonale, assimilable à une forme d'alvéole, comme représenté en figure 8. Notamment, chaque étage présente ici une forme plane, parallèle au plan axial (x,y).

Les différents étages de l'écran 2 peuvent être superposés et reliés entre eux par les ensembles de troisièmes tiges 23. Pour cela, les ensembles de troisièmes tiges 23 peuvent relier deux premières tiges 21 de deux étages successifs, comme illustré sur la figure 15 par exemple, chacune des premières tiges 21 de la figure 15 appartenant à un étage. Dans la configuration stockée, les troisièmes tiges 23 des ensembles de troisièmes tiges 23 sont repliées de sorte que la distance séparant deux étages successifs de l'écran 2 est minimale. Par exemple, en référence à la figure 4, les distances séparant respectivement les points A, B, C sont minimales. Une hauteur de l'écran 2 formée par la superposition de ses étages est donc minimale en configuration stockée. Lors du déploiement axial de l'écran 2 (selon la direction z), les ensembles de troisièmes tiges 23 se déplient de sorte à écarter les étages les uns des autres. Les figures 5 et 6 illustrent l'écran 2 et la disposition des étages une fois le déploiement axial réalisé : les points A, B, C ont été éloignés les uns des autres. Afin de mettre en œuvre le déploiement selon la direction axiale z de l'écran 2, les troisièmes tiges 23 des ensembles de troisièmes tiges 23 ont une position repliée en configuration stockée et une position dépliée en configuration déployée. Notamment, en configuration stockée, les troisièmes tiges 23 de chaque ensemble de troisièmes tiges 23 peuvent, deux à deux, former un premier angle Θ₁ non plat (i.e., différent de 0 degré ou 180 degrés), comme détaillé sur les figures 10 et 15. Lors du déploiement vers la configuration déployée, les troisièmes tiges 23 se déplient progressivement, pour passer de la configuration (stockée) de la figure 4 à la configuration (intermédiaire) de la figure 5, de sorte qu'un tel premier angle Θ₁ augmente jusqu'à devenir un angle plat (de 180 degrés) lorsque les troisièmes tiges 23 de chaque ensemble de troisièmes tiges 23 sont sensiblement alignées, comme illustré sur les figures 5, 6 et 12. Notamment, dans la configuration déployée, les troisièmes tiges 23 de tous les ensembles de troisièmes tiges 23 peuvent être sensiblement parallèles, par exemple à l'axe de référence z.

En référence aux figures 1, 3 et 6, à titre d'exemple, la pluralité de tiges 21, 22, 23 est disposée de sorte que l'écran 2 déployé forme un prisme. Dans de tels exemples, deux étages successifs de l'écran sont reliés entre eux par six ensembles de troisièmes tiges 23, de sorte que chaque première tige 21 de chaque étage est reliée à une première tige 21 consécutive d'un étage successif à ses deux extrémités par deux ensembles de troisièmes tiges 23 respectivement. Les trois étages de l'écran 2 tel que représentés sur les figures 1 à 6 sont donc écartés les uns des autres par le déploiement de douze ensembles de troisièmes tiges 23. Par ailleurs, des ensembles de troisièmes tiges 23 peuvent également permettre de déployer la zone d'attache de l'écran 2 à la plateforme 31 de l'engin spatial 3. Pour cela, trois ensembles de troisièmes tiges 23 supplémentaires sont inclus dans l'écran 2 illustré sur les figures 1 à 6. L'écran 2 représenté en figure 1 présente ainsi dix-huit ensembles de troisièmes tiges 23 reliant les trois étages de l'écran 2 ainsi que la zone d'attache de l'écran 2.

Dans les exemples d'écran 2 illustrés sur les figures, la pluralité de tiges 21, 22, 23 est disposée de sorte que l'écran 2, une fois en configuration déployée, inclut une forme de prisme, mise en évidence sur les figures 1, 3 et 6 notamment. Le prisme formé par l'écran 2 en configuration déployée présente notamment deux bases et plusieurs faces. Dans les exemples de réalisation des figures, les bases du prisme formé par l'écran 2 en configuration déployée sont hexagonales, comme illustré sur la figure 8. De telles bases sont délimitées par des premières tiges 21 et des ensembles de deuxièmes tiges 22. Notamment, dans les exemples illustrés sur les figures, les premières tiges 21 et les deuxièmes tiges 22 des ensembles de deuxièmes tiges 22, une fois l'écran 2 en configuration déployée, ont une même longueur d'un étage à l'autre. Dans un exemple de réalisation, les premières tiges 21 et les deuxièmes tiges 22 des ensembles de deuxièmes tiges 22, une fois l'écran 2 en configuration déployée, ont une même longueur au sein d'un même étage, de sorte que le polygone formé par l'écran 2 déployé est régulier. De la même façon, les troisièmes tiges 23 des ensembles de troisièmes tiges 23 ont, une fois l'écran 2 en configuration déployée, une même longueur (qui peut correspondre à la longueur des premières et deuxièmes tiges 21, 22 ou non) entre deux étages, et dans un exemple de réalisation, pour tous les étages consécutifs, et/ou au sein d'un même étage. L'exemple de prisme formé par l'écran 2 en configuration déployée sur les figures 1, 3 et 6 présente également douze faces, dites faces latérales, rectangulaires sensiblement identiques. Notamment, certaines faces latérales du prisme peuvent être formées d'une part par des premières tiges 21 et d'autre part, par deux ensembles de troisièmes tiges 23, par exemple dans le cas de la face illustrée sur la figure 15. D'autres faces latérales du prisme peuvent être formées d'une part, par deux ensembles de deuxièmes tiges 22 et d'autre part, par deux ensembles de troisièmes tiges 23, par exemple dans le cas de la face illustrée sur la figure 16.

L'écran 2 comprend également d'autres faces formant la zone d'attache de l'écran 2 à la plateforme 31 de l'engin spatial 3. En référence à la figure 6, la zone d'attache de l'écran 2 est formée par trois faces, dites faces d'attache. Chaque face d'attache de l'écran 2 est formée par une première tige 21, deux ensembles de troisièmes tiges 23 et une première tige d'attache 21'.

Les faces, latérales et d'attache, de l'écran 2 peuvent être recouvertes par un film thermiquement isolant 20, par exemple de type isolation multicouche (en anglais « multi-layer insulation » ou MLI) ou de type isolation monocouche (en anglais « single-layer insulation » ou SLI). Un tel film thermiquement isolant 20 peut par exemple être attaché au niveau des tiges 21, 22, 23 formant les faces de l'écran 2, de sorte que les faces de l'écran sont aptes à entourer et protéger l'équipement spatial 1 des illuminations grâce au film thermiquement isolant 20, tel qu'illustré sur la figure 3. Notamment, lorsque l'écran est en configuration stockée, le film thermiquement isolant 20 est plié et lorsque l'écran est en configuration déployée, le film thermiquement isolant 20 est tendu entre les tiges 21, 22, 23.

Les tiges 21, 22, 23 formant la structure de l'écran de protection 2 sont jointes entre elles par des liaisons rotatives 24, 25. Les liaisons rotatives 24, 25 peuvent inclure des liaisons rotatives passives 24 et des liaisons rotatives actives 25. Un exemple de répartition des liaisons rotatives 24, 25 sur un écran 2 est représenté en figure 9 : les liaisons rotatives passives 24 sont représentées par un rond tandis que les liaisons rotatives actives 25 sont représentées par un carré. Les liaisons rotatives 24, 25 peuvent également inclure des liaisons rotatives d'attache au niveau de la zone d'attache de l'écran 2 à la plateforme 31 de l'engin spatial 3, de sorte à permettre un mouvement relatif entre l'écran 2 et la plateforme 3 : de telles liaisons rotatives d'attaches sont également représentées par un triangle sur la figure 9, à titre d'exemple. Dans un exemple de réalisation, les liaisons rotatives 24, 25 sont disposées exclusivement au niveau des extrémités de chacune de la pluralité de tiges 21, 22, 23, de sorte que les tiges 21, 22, 23 sont reliées entre elles au niveau de leurs extrémités par les liaisons rotatives 24, 25.

Les liaisons rotatives actives 25 sont configurées pour mettre en œuvre le déploiement de l'écran 2 de la configuration stockée à la configuration déployée. Pour cela, les liaisons rotatives actives 25 peuvent stocker une quantité d'énergie, également désignée par précharge, la libération d'une telle quantité d'énergie permettant d'activer le déploiement de l'écran 2 de la configuration stockée à la configuration déployée. Le déploiement d'une telle quantité d'énergie stockée par les liaisons rotatives actives 25 sera détaillé plus loin dans la description. Dans un exemple de réalisation, l'énergie stockée par les liaisons rotatives actives 25 peut être une énergie mécanique. En variante, l'énergie stockée par les liaisons rotatives actives 25 peut être une énergie électrique par exemple.

Notamment, chacun des ensembles de deuxièmes tiges 22 et des ensembles de troisièmes tiges 23 comprend au moins une liaison rotative active 25 reliant au moins deux deuxièmes tiges 22 ou deux troisièmes tiges 23 respectivement. Autrement dit, chacun des ensembles de deuxièmes tiges 22 et des ensembles de troisièmes tiges 23 est configuré pour libérer une énergie stockée au niveau de sa (ou ses) liaison(s) rotative(s) active(s) 25, de sorte que le déploiement de chaque ensemble de deuxièmes ou troisièmes tiges 22, 23 entraîne le déploiement selon les directions respectivement radiale (r,Θ) et axiale z de l'écran 2. Par exemple, en référence aux figures 9 à 13, chacun des ensembles de deuxièmes tiges 22 (respectivement troisièmes tiges 23) comprend deux deuxièmes tiges 22 (respectivement troisièmes tiges 23) reliées entre elles par une liaison rotative active 25. Dans un autre exemple, en référence à la figure 15 (respectivement figure 16), deux ensembles de troisièmes tiges 23 (respectivement, deuxièmes tiges 22) sont représentés et chaque ensemble de troisièmes tiges 23 (respectivement, deuxièmes tiges 22) comprend quatre troisièmes tiges 23 (respectivement, deuxièmes tiges 22) reliées entre elles par des liaisons rotatives actives 25 : chaque ensemble de troisièmes tiges 23 (respectivement, deuxièmes tiges 22) comprend ainsi trois liaisons rotatives actives 25.

Dans un exemple de réalisation, chaque liaison rotative active 25 peut comprendre des bandes métalliques 25a, de type mètre-rubans métalliques, reliant entre elles les extrémités de deux deuxièmes ou troisièmes tiges 22, 23. Notamment, une liaison rotative active 25 entre deux tiges peut être formée en assemblant deux bandes métalliques 25a, de type mètre-ruban métallique, d'une part sur deux faces opposées de l'extrémité d'une tige, et d'autre part sur deux faces opposées de l'extrémité de l'autre tige, formant ainsi des rails de part et d'autre des extrémités des tiges qui sont ainsi reliées entre elles par la liaison. De telles bandes métalliques 25a sont par exemple illustrées sur les figures 10, 12, 15 et 16, sur lesquelles les bandes métalliques 25a forment des rails pour des paires de troisièmes tiges 23. La figure 16 illustre également des bandes métalliques 25a forment une paire de rails pour des paires de deuxièmes tiges 22. Lorsque l'écran 2 est dans la configuration stockée, de telles bandes métalliques 25a peuvent être en flexion, de sorte que les premières et deuxièmes tiges 22, 23 sont repliées, comme illustré sur les figures 10, 15 et 16, en stockant une quantité d'énergie tendant à remettre les bandes métalliques dans une configuration rectiligne, et donc à déplier la paire de tiges reliées entre elles par cette paire de bandes. Lorsque l'écran 2 est dans la configuration déployée, les bandes métalliques 25a peuvent être droites, de sorte que les premières et deuxièmes tiges 22, 23 sont dépliées et alignées entre les bandes métalliques 25a, comme illustré sur la figure 12.

En variante, la liaison rotative active 25 peut comprendre un ressort de torsion 25b, configuré pour relier des paires de deuxièmes et/ou de troisièmes tiges 22, 23. Notamment, lorsque l'écran 2 est dans une configuration stockée, le ressort de torsion 25b exerce une force de torsion non nulle sur les tiges 22, 23 de sorte que les tiges 22, 23 sont repliées, comme illustré sur la figure 11. Lorsque l'écran 2 est dans la configuration déployée, le ressort de torsion 25b peut être dans une position d'équilibre (au repos), de sorte que les tiges 22, 23 sont dépliées et alignées, comme illustré sur la figure 13. Dans d'autres variantes, la liaison rotative active 25 pourrait comprendre un élément motorisé ou une combinaison des éléments cités.

Les liaisons rotatives passives 24 sont configurées pour accompagner le mouvement de déploiement de l'écran 2 initié par les liaisons rotatives actives 25 en assurant la cohérence de déploiement de la structure de l'écran 2 par l'ensemble de ses tiges 21, 22, 23. Les liaisons rotatives passives 24 sont donc des liaisons pivot ne stockant pas d'énergie, et ne permettent pas en tant que telles d'initier un déploiement de l'écran 2. Les liaisons rotatives passives 24 permettent plutôt d'introduire un degré de liberté dans le mouvement des tiges 21, 22, 23 formant l'écran 2 lors de son déploiement. Pour cela, chaque liaison rotative passive 24 peut être formée par au moins un système de type arbre (comme une vis) et alésage, permettant un guidage en rotation (également désigné par une liaison pivot) de deux tiges 21, 22, 23 reliées par une telle liaison rotative passive 24. Les liaisons rotatives passives 24 permettent notamment d'accommoder la variation de l'angle formé entre une première tige 21 d'une part, et une deuxième tige 22 ou une troisième tige 23 à laquelle la première tige 21 est reliée d'autre part, dans le déploiement de l'écran 2 de la configuration stockée à la configuration déployée. Pour cela, dans un exemple de réalisation tel qu'illustré en figure 9, les liaisons rotatives passives 24 sont disposées au moins au niveau des extrémités des premières tiges 21. Notamment, dans un tel mode de réalisation, chaque liaison rotative passive 24 relie au moins trois tiges parmi les premières tiges 21, les deuxièmes tiges 22 et les troisièmes tiges 23. Par exemple, en référence à la figure 9, chacun des points A, B et C correspond à une liaison rotative passive 24, qui sera détaillée ci-après pour chacun des points A, B, C. Les faces latérales F1, F2, F3, F4 et la face d'attache FA détaillées ci-après sont représentées sur les figures 3 et 5 respectivement.

La liaison rotative passive 24 au niveau du point A comprend deux liaisons pivot reliant trois tiges : une première tige 21, une deuxième tige 22 et une troisième tige 23. Le guidage en rotation de la liaison rotative passive 24 au niveau du point A est représenté sur les figures 17 et 18, correspondant respectivement à un positionnement des tiges 21, 22, 23 au niveau du point A dans la configuration stockée et dans la configuration déployée. Notamment, la première tige 21 et la troisième tige 23 appartiennent à une première face latérale F1 sécante à une deuxième face latérale adjacente F2 incluant la deuxième tige 22 et la même troisième tige 23 (la troisième tige 23 étant une arrête à l'intersection des première et deuxième faces latérales F1, F2). La liaison rotative passive 24 au niveau du point A permet donc de guider en rotation les tiges 21, 22, 23 de sorte à obtenir deux faces latérales F1, F2 adjacentes du prisme formé par l'écran 2.

La liaison rotative passive 24 au niveau du point B comprend trois liaisons pivot reliant quatre tiges : une première tige 21, une deuxième tige 22 et deux troisièmes tiges 23, désignées par troisièmes tiges 23a et 23b. Notamment, la première tige 21 et la troisième tige 23a appartiennent à la première face latérale F1 sécante à la deuxième face latérale voisine F2 incluant la deuxième tige 22 et la même troisième tige 23a (la troisième tige 23a étant une arrête à l'intersection des première et deuxième faces latérales). De la même façon, la première tige 21 et la troisième tige 23b appartiennent à une troisième face latérale F3 parallèle à la première face latérale F1 et sécante à une quatrième face latérale voisine F4, parallèle à la deuxième face latérale F2, et incluant la deuxième tige 22 et la même troisième tige 23b (la troisième tige 23b étant une arrête à l'intersection des troisième F3 et quatrième faces latérales F4). Le guidage en rotation de la liaison rotative passive 24 au niveau du point B est représenté sur les figures 19 et 20, correspondant respectivement à un positionnement des tiges 21, 22, 23a, 23b au niveau du point B dans la configuration stockée et dans la configuration déployée. La liaison rotative passive 24 au niveau du point B se situe donc à l'intersection de quatre faces latérales F1, F2, F3, F4 et permet donc de guider en rotation les tiges 21, 22, 23a et 23b de sorte à obtenir quatre faces latérales adjacentes F1, F2, F3, F4 du prisme formé par l'écran 2.

La liaison rotative passive 24 au niveau du point C comprend trois liaisons pivot reliant quatre tiges : une première tige 21, une deuxième tige 22 et deux troisièmes tiges 23, désignées par troisièmes tiges 23c et 23d. Notamment, la première tige 21 et la troisième tige 23c appartiennent à la troisième face latérale F3 (décrite au paragraphe précédent) sécante à la quatrième face latérale F4 voisine incluant la deuxième tige 22 et la même troisième tige 23c (la troisième tige 23c étant une arrête à l'intersection des troisième F3 et quatrième faces latérales F4). De plus, les troisièmes tiges 23b et 23c forment, dans l'exemple de la figure 9, un ensemble de troisièmes tiges 23. Par ailleurs, la première tige 21 et la troisième tige 23d appartiennent à une face d'attache FA sécante à la troisième face latérale F3 (la première tige 21 étant une arrête à l'intersection de la troisième face latérale F3 et de la face d'attache F4). Le guidage en rotation de la liaison rotative passive 24 au niveau du point C est représenté sur les figures 21 et 22, correspondant respectivement à un positionnement des tiges 21, 22, 23c, 23d au niveau du point C dans la configuration stockée et dans la configuration déployée. Notamment, au niveau du point C, la liaison rotative passive 24 est configurée pour permettre un guidage en rotation spécifique à la face d'attache FA, représenté au niveau du point C₁, de sorte que, contrairement aux première F1 et troisième faces latérales F3 parallèles, la troisième face latérale F3 et la face d'attache FA sont sécantes. Le point C permet donc un guidage en rotation des tiges 21, 22, 23c pour le positionnement des faces latérales F3, F4 tandis que le point C₁ permet un guidage en rotation de la tige 23d pour le positionnement de la face d'attache FA.

Les liaisons rotatives d'attache au niveau des extrémités des premières tiges d'attache 21', permettent un guidage par rotation entre l'écran 2 (plus particulièrement la zone d'attache de l'écran 2) et la plateforme 31 de l'engin spatial 3. Une telle liaison rotative d'attache est notamment représentée au niveau du point D. Dans un exemple de réalisation, une telle liaison rotative d'attache peut être de type liaison rotative passive 24.

Il peut à présent être décrit une phase de déploiement de l'écran de protection 2 d'une configuration stockée, telle qu'illustrée en figure 2 et 4, à une configuration déployée, telle qu'illustrée en figures 1 et 6.

Dans une phase initiale, l'écran 2 est dans une configuration stockée. Une telle phase initiale correspond par exemple à une phase de lancement de l'engin spatial 3. Dans la configuration stockée, les ensembles de deuxièmes tiges 22 ainsi que les ensembles de troisièmes tiges 23 sont dans une position repliée. Autrement dit, chacune des liaisons rotatives actives 25 incluse dans chacun des ensembles de deuxièmes tiges 22 et des ensembles de troisièmes tiges 23 stocke à ce stade une quantité d'énergie prédéfinie. Dans un exemple de réalisation, l'ensemble des troisièmes tiges 23 d'un même ensemble de troisièmes tiges 23 forment, deux à deux, un même premier angle Θ₁, comme illustré sur la figure 15. Notamment, un tel premier angle Θ₁ peut être identique pour tous les ensembles de troisièmes tiges 23 de l'écran 2. De la même façon, l'ensemble des deuxièmes tiges 22 d'un même ensemble de deuxièmes tiges 22 forment, deux à deux, un même deuxième angle Θ₂ , comme illustré sur la figure 16. Notamment, un tel deuxième angle Θ₂ peut être identique pour tous les ensembles de deuxièmes tiges 22 de l'écran 2. Notamment, la quantité énergie stockée par chacune des liaisons rotatives actives 25 peut dépendre des propriétés élastiques et/ou de torsion des éléments formant la liaison rotative active 25, typiquement en fonction d'un taux d'élasticité des bandes métalliques 25a ou d'une raideur du ressort de torsion 25b. Par ailleurs, le choix de bandes métalliques 25a et/ou de ressorts de torsion 25b pour former les liaisons rotatives actives 25 peut dépendre de la quantité d'énergie stockée visée pour les différents ensembles de deuxièmes et troisièmes tiges 22, 23. La quantité d'énergie stockée permet Notamment de contrôler le déploiement (notamment sa vitesse, son déroulement) de l'écran 2. Un tel aspect sera détaillé dans la description de la phase de déploiement de l'écran 2.

Lors de la phase initiale, l'énergie est stockée au niveau des liaisons rotatives actives 25 grâce à une torsion ou une flexion des éléments formant les liaisons rotatives actives 25. Par exemple, dans le cas de bandes métalliques 25a, l'énergie est stockée au niveau des liaisons rotatives actives 25 par flexion des bandes métalliques 25a, permettant de maintenir les ensembles de tiges 22, 23 repliées. Dans le cas de ressort de torsion 25b, la torsion du ressort 25b permet de maintenir les ensembles de tiges 22, 23 repliées et de stocker une quantité énergie sous la forme d'une énergie élastique emmagasinée au niveau du ressort 25b. Notamment, la présence d'une énergie stockée est rendue possible en ce que les éléments 25a, 25b formant les liaisons rotatives actives 25 ne sont pas au repos, autrement dit, ne sont pas dans une position d'équilibre. Dans un exemple de réalisation, le maintien des liaisons rotatives actives 25 dans une position hors équilibre peut être rendu possible par l'utilisation d'un dispositif de maintien au lancement, par exemple de type « Hold Down & Release Mechanisms » ou HDRM, au niveau des tiges 21, 22, 23. Par exemple, en référence à la figure 15, le maintien de la position repliée des troisièmes tiges 23 peut être rendu possible par un dispositif de maintien au lancement (non représenté sur la figure 15) attaché entre les deux premières tiges 21 et permettant de conserver une distance minimale entre ces deux premières tiges 21.

Dans une phase de déploiement de l'écran 2, la quantité d'énergie stockée par les liaisons rotatives actives 25 de chacun des ensembles de deuxièmes tiges 22 et de troisièmes tiges 23 est libérée. Une telle phase de déploiement peut par exemple correspondre à une mise en orbite de l'engin spatial 3 ou à un démarrage d'une phase opérationnelle de l'équipement spatial 1 par exemple. Dans un exemple de réalisation, une telle libération de l'énergie stockée par les liaisons rotatives actives 25 peut être rendue possible par une commande de libération ou de relaxation du dispositif de maintien au lancement, de sorte que les éléments 25a, 25b formant les liaisons rotatives actives 25 ne sont plus contraints. Les liaisons rotatives actives 25 peuvent alors libérer l'énergie stockée, entraînant le déploiement des ensembles de deuxièmes et troisièmes tiges 22, 23. Autrement dit, les premiers et deuxièmes angles Θ₁, Θ₂ changent et se rapproche d'un angle plat lors de la phase de déploiement au fur et à mesure que les deuxièmes et troisièmes tiges 22, 23 se déplient. De plus, le déploiement des deuxièmes et troisièmes tiges 22, 23 entraînent, un déploiement de la base structurelle périphérique de l'écran 2 par entraînement en rotation des liaisons rotatives passives 24.

Notamment, la libération de l'énergie stockée peut être mise en œuvre par un déclenchement ordonné, de sorte à contrôler le déploiement de l'écran 2. Par exemple, Dans un exemple de réalisation, le déclenchement de la phase de déploiement peut être unique pour l'ensemble de l'écran 2, via une commande unique de libération de l'énergie stockée par toutes les liaisons rotatives actives 25 de l'écran 2. Dans un autre exemple de réalisation, le déclenchement de la phase de déploiement peut être mis en œuvre selon une séquence de plusieurs déclenchements, par exemple en commandant une première libération dans un premier temps d'une première quantité d'énergie Q1 stockée par certaines liaisons rotatives actives 25 (typiquement, les liaisons rotatives actives 25 inclues dans les ensembles de troisièmes tiges 23) suivie, dans un deuxième temps, d'une deuxième libération dans un deuxième temps d'une deuxième quantité d'énergie Q2 stockée par les autres liaisons rotatives actives 25 (typiquement, les liaisons rotatives actives 25 inclues dans les ensembles de deuxièmes tiges 23). Le déclenchement différé peut alors permettre de décomposer la phase de déploiement de l'écran 2 en une première phase de déploiement axial selon la direction axiale z et en une deuxième phase de déploiement radial selon la direction radiale (r, Θ). De la même façon, un déclenchement différé peut permettre de décomposer la phase de déploiement de l'écran 2 en une première phase de déploiement radial suivie d'une deuxième phase de déploiement axial. En variante, les premières et deuxièmes quantités d'énergie stockées dans les ensembles de deuxièmes tiges 22 et de troisièmes tiges 23 respectivement peuvent différer, de sorte que le déploiement de l'écran 2 peut être décomposé selon différentes directions de déploiement de par les différences de quantités d'énergie stockées, qui impactent la vitesse et la durée de déploiement des ensembles de deuxièmes et troisièmes tiges 22, 23. Par exemple, la figure 5 illustre une phase intermédiaire de déploiement, au cours de laquelle un déploiement selon la direction axiale z a eu lieu (la quantité d'énergie stockée par les ensembles de troisièmes tiges 23 a été libérée) et un déploiement selon la direction radiale (r, Θ) est en cours ou à venir (la quantité d'énergie stockée par les ensembles de deuxièmes tiges 22 n'a pas été complétement ou encore libérée).

Dans une phase déployée, l'écran 2 est dans une configuration déployée. Une telle phase déployée correspond par exemple à une phase opérationnelle de l'équipement spatial 1, l'écran 2 assurant la protection solaire de l'équipement spatial 1 au cours de sa mission spatiale. Dans la configuration déployée de l'écran, les premiers angles Θ₁ et les deuxièmes angles Θ₂ formés respectivement par les paires de troisièmes tiges 23 et de deuxièmes tiges 22 sont plats, comme illustré sur les figures 12 et 13. Dans un exemple de réalisation, l'ensemble des liaisons rotatives actives 25 atteint une position d'équilibre lorsque la configuration déployée est atteinte. Notamment, une telle position d'équilibre permet de verrouiller la structure de l'écran 2 dans la configuration déployée, de sorte que le déploiement est irréversible. En variante, les liaisons rotatives actives 25 peuvent inclure des éléments motorisés, et l'énergie alimentée aux liaisons rotatives actives 25 est nulle une fois la configuration déployée atteinte. Dans le cas de liaisons rotatives actives 25 motorisées, le déploiement de l'écran 2 pourrait être réversible.

Dans le contexte de la présente description et des figures 1 à 12, la structure de l'écran de protection et son déploiement sont décrits en considérant une structure fermée régulière. Notamment, l'écran 2 est considéré comme ayant une structure de polyèdre, et plus particulièrement de prisme présentant des faces latérales rectangulaires et des bases polygonales, ici hexagonales, planes. Néanmoins, dans d'autres exemples de réalisation, l'écran 2 peut présenter une structure différente d'un prisme. Dans d'autres exemples de réalisation, le nombre d'étages, le nombre et/ou la disposition de premières et deuxièmes tiges 21, 22 par étage peut différer. Le nombre de tiges 21, 22 peut différer entre différents étages. Le nombre de tiges 21, 22, 23 par ensemble de deuxièmes et/ou troisièmes tiges 22, 23 peut différer et/ou varier d'un ensemble à l'autre. Chaque étage peut être une structure polygonale non plane : par exemple, certains ensembles de troisièmes tiges 23 séparant deux étages successifs peuvent présenter des troisièmes tiges 23 plus longues que les troisièmes tiges 23 des ensembles de troisièmes tiges 23 restants, de sorte que l'écran présente des portions à hauteurs différentes selon l'axe de référence z. Les dimensions et les directions de déploiement peuvent également varier en fonction du nombre, des dimensions et de la disposition de la pluralité de tiges 23 et/ou des liaisons rotatives 24, 25. La structure de l'écran 2 peut ainsi être modifiée, notamment pour s'adapter à des formes non régulières d'équipements spatiaux 1 à protéger.

### Liste des signes de référence

- 1 : équipement spatial
- 3 : engin spatial
- 31 : plateforme de l'engin spatial
- 2 : écran de protection
- 20 : film thermiquement isolant
- 21 : première tige
- 21' : première tige d'attache à l'engin spatial
- 22 : deuxième tige (d'extension radiale)
- 23, 23a, 23b, 23c, 23d : troisièmes tiges (d'extension axiale)
- 24 : liaison rotative passive
- 25 : liaison rotative active
- 25a : liaison rotative active via des bandes métalliques
- 25b : liaison rotative active via un ressort de torsion
- Q1 : première quantité d'énergie
- Q2 : deuxième quantité d'énergie
- Θ₁ : premier angle (formé par deux troisièmes tiges)
- Θ₂ : deuxième angle (formé par deux deuxièmes tiges)
- A, B, C, D, C₁ : points de rotation
- F1, F2, F3 : faces latérales
- FA : face d'attache

## Revendications

1. Écran (2) de protection solaire déployable pour un équipement spatial (1), présentant au moins une zone d'attache à une plateforme (31) d'un engin spatial (3) incluant ledit équipement spatial (1), ledit écran (2) étant configuré pour passer d'une configuration stockée à une configuration déployée en orbite et **caractérisé en ce qu'**il comprend :
-- des tiges,
-- des liaisons rotatives (24, 25) joignant des tiges (21, 22, 23) entre elles, les liaisons rotatives étant du type liaison rotative active (25) stockant une quantité d'énergie ou du type liaison rotative passive (24), les tiges (21, 22, 23) étant recouvertes par un film thermiquement isolant (20) plié lorsque l'écran (2) est en configuration stockée et tendu entre les tiges (21, 22, 23) lorsque l'écran (2) est en configuration déployée,
dans lequel les tiges sont constituées par au moins :
-- des premières tiges (21) structurelles, formant une base structurelle périphérique en configuration stockée ainsi qu'en configuration déployée,
-- des deuxièmes tiges (22) d'extension radiale, reliées entre elles au moins par paires pour former des ensembles de deuxièmes tiges, chaque ensemble de deuxièmes tiges (22) reliant deux premières tiges (21) consécutives et étant configuré pour déployer l'écran (2) selon une direction radiale (r,Θ),
-- des troisièmes tiges (23) d'extension axiale, reliées entre elles au moins par paires pour former des ensembles de troisièmes tiges, chaque ensemble de troisièmes tiges (23) reliant deux premières tiges (21) consécutives et étant configuré pour déployer l'écran (2) selon une direction axiale (z) et
-- chaque ensemble de deuxièmes tiges (22) ou troisièmes tiges (23) comprenant au moins une liaison rotative active (25),
lesdits ensembles de deuxièmes tiges (22) et troisièmes tiges (23) étant repliés lorsque l'écran (2) est en configuration stockée, les liaisons rotatives actives (25) étant configurées pour déplier lesdits ensemble de deuxièmes tiges (22) et troisièmes tiges (23) et déclencher le passage de la configuration stockée à la configuration déployée, en entraînant la rotation des liaisons rotatives passives (24) et un déploiement dans une direction axiale et dans une direction radiale.

2. Écran (2) selon la revendication 1, dans lequel les premières tiges (21) sont réparties par étages selon la direction axiale (z), chaque étage comprenant un même nombre de premières tiges (21), supérieur ou égal à trois.

3. Écran (2) selon la revendication 2, présentant au moins trois étages distincts, dans lequel lesdits étages sont écartés les uns des autres par les troisièmes tiges (23) lors du déploiement de l'écran (2) selon la direction axiale (z).

4. Écran (2) selon l'une des revendications 2 et 3, dans lequel, à chaque étage, deux premières tiges (21) consécutives sont reliées par lesdits ensembles de deuxièmes tiges (22), tandis que deux premières tiges (21) de deux étages successifs sont reliées par lesdits ensembles de troisièmes tiges (23).

5. Écran (2) selon la revendication 4, dans lequel, dans la configuration déployée, les premières tiges (21) et les deuxièmes tiges (22) d'un même étage forment une structure polygonale plane, cette structure polygonale plane étant présente à plusieurs des étages.

6. Écran (2) selon l'une des revendications 2 à 5, dans lequel, dans la configuration déployée, les étages s'étendent parallèlement à un même plan (x,y).

7. Écran (2) selon l'une des revendications 2 à 4, dans lequel la zone d'attache à la plateforme (31) de l'engin spatial (3) comprend des liaisons rotatives reliées à des ensembles de troisièmes tiges (23), lesdits ensembles de troisièmes tiges (23) reliant des premières tiges (21) à des premières tiges d'attache (21') en contact avec ladite plateforme (31).

8. Écran (2) selon l'une des revendications précédentes, dans lequel les liaisons rotatives (24, 25) sont disposées exclusivement aux extrémités des tiges (21, 22, 23).

9. Écran (2) selon l'une des revendications précédentes dans lequel, dans la configuration stockée et dans la configuration déployée, les tiges (21, 22, 23) sont disposées pour former une structure fermée selon la direction radiale (r,Θ) apte à entourer l'équipement spatial (1).

10. Écran (2) selon la revendication 9, dans lequel un volume formé par ladite structure fermée augmente à la fois lorsque l'écran (2) est déployé selon la direction radiale (r,Θ) et lorsque l'écran (2) est déployé selon la direction axiale (z).

11. Écran (2) selon l'une des revendications précédentes, dans lequel les deuxièmes tiges (22) et les troisièmes tiges (23) sont reliées respectivement par paires, et :
- dans la configuration stockée, les deux troisièmes tiges (23) de chacune des paires de troisièmes tiges (23) forment un même premier angle (Θ₁) et les deux deuxièmes tiges (22) de chacune des paires de deuxièmes tiges (22) forment un même deuxième angle (Θ₂), lesdits premier angle (Θ₁) et deuxième angle (Θ₂) étant compris entre 0 et 180 degrés, et
- dans la configuration déployée, les deux troisièmes tiges (23) de chacune des paires de troisièmes tiges (23) s'étendent parallèlement à la direction axiale (z) et les deux deuxièmes tiges (22) de chacune des paires de deuxièmes tiges (22) s'étendent parallèlement à un même plan (x,y).

12. Écran (2) selon l'une des revendications précédentes, dans lequel au moins une liaison rotative passive (24) comprend au moins deux liaisons pivots distinctes reliant au moins trois tiges parmi les premières tiges (21), les deuxièmes tiges (22) et les troisièmes tiges (23).

13. Écran (2) selon l'une des revendications précédentes, dans lequel la liaison rotative active (25) reliant lesdites paires de deuxièmes tiges (22) et troisièmes tiges (23) comprend au moins un élément parmi au moins :
- des bandes métalliques (25a), de type mètre-rubans métalliques, formant un rail de part et d'autre des tiges (22, 23) de chacune desdites paires de deuxièmes tiges (22) et troisièmes tiges (23),
- un ressort de torsion (25b), ou
- un moteur.

14. Écran (2) selon l'une quelconque des revendications précédentes, dans lequel l'énergie stockée est liée à une torsion ou une flexion des liaisons rotatives actives (25) dans la configuration stockée et lesdites liaisons rotatives actives (25) atteignent une position d'équilibre lorsque l'écran (2) est dans la configuration déployée.

15. Écran (2) selon l'une quelconque des revendications précédentes, les liaisons rotatives actives des troisièmes tiges (23) stockant une première quantité d'énergie (Q1) et les liaisons rotatives actives des deuxièmes tiges (22) stockant une deuxième quantité d'énergie (Q2), et dans lequel le passage de la configuration stockée à la configuration déployée est déclenché par une libération de la première quantité d'énergie (Q1) et de la deuxième quantité d'énergie (Q2) entraînant l'une des séquences de déploiement parmi :
- le déploiement de l'écran (2) selon la direction axiale (z) suivi du déploiement de l'écran (2) selon la direction radiale (r,Θ),
- le déploiement de l'écran (2) selon la direction radiale (r,Θ) suivi du déploiement de l'écran (2) selon la direction axiale (z), et
- le déploiement de l'écran (2) selon la direction radiale (r,Θ) et selon la direction axiale (z) de façon concurrente,
en fonction au moins :
- d'une différence entre la première quantité d'énergie (Q1) et la deuxième quantité d'énergie (Q2), et/ou
- d'un décalage temporel entre la libération de la première quantité d'énergie (Q1) et de la deuxième quantité d'énergie (Q2).

16. Système comprenant au moins un équipement spatial (1) et un écran (2) de protection déployable selon l'une quelconque des revendications précédentes.

17. Système selon la revendication 16, dans lequel l'équipement spatial (1) est un télescope déployable comprenant des pétales déployables formant au moins un miroir principal et un miroir secondaire déployables.

18. Système selon l'une des revendications 16 et 17 comprenant en outre un dispositif de maintien au lancement relié à des tiges (21, 22, 23) de l'écran (2) et configuré pour pouvoir se séparer des tiges (21, 22, 23) pour permettre l'adoption par l'écran (2) d'une configuration déployée par une libération d'une énergie stockée.

19. Système selon la revendication 18, dans lequel le dispositif de maintien au lancement est relié à plusieurs premières tiges (21) superposées dans une direction axiale (z).

## Patentansprüche

1. Entfaltbarer Sonnenschutzschirm (2) für eine Weltraumausrüstung (1), die wenigstens einen Befestigungsbereich an einer Plattform (31) eines Raumfahrzeugs (3) aufweist, das die Weltraumausrüstung (1) umfasst, wobei der Schirm (2) dazu ausgebildet ist, von einer gelagerten Konfiguration in eine im Orbit entfalteten Konfiguration überzugehen, und **dadurch gekennzeichnet ist, dass** er umfasst:
- Stäbe,
- Drehverbindungen (24, 25), die Stäbe (21, 22, 23) miteinander verbinden, wobei die Drehverbindungen vom Typ aktive Drehverbindung (25) sind, die eine Energiemenge speichert, oder vom Typ passive Drehverbindung (24) sind, wobei die Stäbe (21, 22, 23) mit einer wärmeisolierenden Folie (20) bedeckt sind, die gefaltet ist, wenn sich der Schirm (2) in der gelagerten Konfiguration befindet, und zwischen den Stäben (21, 22, 23) gespannt ist, wenn sich der Schirm (2) in der entfalteten Konfiguration befindet,
wobei die Stäbe wenigstens umfassen:
- erste strukturelle Stäbe (21), die sowohl in der gelagerten als auch in der entfalteten Konfiguration eine umlaufende strukturelle Basis bilden,
- zweite Stäbe (22) zur radialen Ausdehnung, die wenigstens paarweise miteinander verbunden sind, um Sätze von zweiten Stäben zu bilden, wobei jeder Satz von zweiten Stäben (22) zwei aufeinanderfolgende erste Stäbe (21) verbindet und dazu ausgebildet ist, den Schirm (2) in einer radialen Richtung (r, Θ) zu entfalten,
- dritte Stäbe (23) zur axialen Ausdehnung, die miteinander wenigstens paarweise verbunden sind, um Sätze von dritten Stäben zu bilden, wobei jeder Satz von dritten Stäben (23) zwei aufeinanderfolgende erste Stäbe (21) verbindet und dazu ausgebildet ist, den Schirm (2) in einer axialen Richtung (z) zu entfalten, und
- wobei jeder Satz von zweiten Stäben (22) oder dritten Stäben (23) wenigstens eine aktive Drehverbindung (25) umfasst,
wobei die Anordnungen von zweiten Stäben (22) und dritten Stäben (23) zusammengeklappt sind, wenn sich der Schirm (2) in der gelagerten Konfiguration befindet, wobei die aktiven Drehverbindungen (25) dazu ausgebildet sind, die zweiten Stäbe (22) und dritten Stäbe (23) zu entfalten und den Übergang von der gelagerten Konfiguration in die entfaltete Konfiguration auszulösen, indem sie eine Drehung der passiven Drehverbindungen (24) und eine Entfaltung in axialer und radialer Richtung bewirken.

2. Schirm (2) nach Anspruch 1, wobei die ersten Stäbe (21) in der axialen Richtung (z) stufenweise verteilt sind, wobei jede Stufe eine gleiche Anzahl von ersten Stäben (21) umfasst, die größer oder gleich drei ist.

3. Schirm (2) nach Anspruch 2, welcher wenigstens drei getrennte Stufen aufweist, wobei die Stufen beim Entfalten des Schirms (2) in axialer Richtung (z) durch die dritten Stäbe (23) voneinander beabstandet sind.

4. Schirm (2) nach einem der Ansprüche 2 und 3, wobei auf jeder Stufe zwei aufeinanderfolgende erste Stäbe (21) durch die Sätze von zweiten Stäben (22) verbunden sind, während zwei erste Stäbe (21) zweier aufeinanderfolgender Stufen durch die Sätze von dritten Stäben (23) verbunden sind.

5. Schirm (2) nach Anspruch 4, wobei in der entfalteten Konfiguration die ersten Stäbe (21) und die zweiten Stäbe (22) derselben Stufe eine ebene polygonale Struktur bilden, wobei diese ebene polygonale Struktur in mehreren Stufen vorhanden ist.

6. Schirm (2) nach einem der Ansprüche 2 bis 5, wobei sich die Stufen in der entfalteten Konfiguration parallel zu einer gemeinsamen Ebene (x, y) erstrecken.

7. Schirm (2) nach einem der Ansprüche 2 bis 4, wobei der Befestigungsbereich an der Plattform (31) des Raumfahrzeugs (3) drehbare Verbindungen aufweist, die mit Sätzen von dritten Stäben (23) verbunden sind, wobei die Sätze von dritten Stäben (23) erste Stäbe (21) in Kontakt mit der Plattform (31) mit ersten Befestigungsstäben (21') verbinden.

8. Schirm (2) nach einem der vorhergehenden Ansprüche, wobei die Drehverbindungen (24, 25) ausschließlich an den Enden der Stäbe (21, 22, 23) angeordnet sind.

9. Schirm (2) nach einem der vorhergehenden Ansprüche, wobei die Stäbe (21, 22, 23) in der gelagerten Konfiguration und in der entfalteten Konfiguration derart angeordnet sind, dass sie eine geschlossene Struktur in radialer Richtung (r, Θ) bilden, die dazu geeignet ist, das Raumfahrzeug (1) zu umgeben.

10. Schirm (2) nach Anspruch 9, wobei ein durch die geschlossene Struktur gebildetes Volumen sowohl zunimmt, wenn der Schirm (2) in radialer Richtung (r, Θ) entfaltet wird, als auch, wenn der Schirm (2) in axialer Richtung (z) entfaltet wird.

11. Schirm (2) nach einem der vorhergehenden Ansprüche, wobei die zweiten Stäbe (22) und die dritten Stäbe (23) jeweils paarweise verbunden sind und wobei:
- in der gelagerten Konfiguration die beiden dritten Stäbe (23) jedes der Paare von dritten Stäben (23) einen gleichen ersten Winkel (Θ₁) bilden und die beiden zweiten Stäbe (22) jedes der Paare von zweiten Stäben (22) einen gleichen zweiten Winkel (Θ₂) bilden, wobei der erste Winkel (Θ₁) und der zweite Winkel (Θ₂) zwischen 0 und 180 Grad liegen, und
- wobei sich in der entfalteten Konfiguration die beiden dritten Stäbe (23) jedes der Paare von dritten Stäben (23) parallel zur axialen Richtung (z) erstrecken und die beiden zweiten Stäbe (22) jedes der Paare von zweiten Stäben (22) parallel zu einer gleichen Ebene (x, y) erstrecken.

12. Schirm (2) nach einem der vorhergehenden Ansprüche, wobei wenigstens eine passive Drehverbindung (24) wenigstens zwei verschiedene Schwenkverbindungen umfasst, die wenigstens drei Stäbe der ersten Stäbe (21), der zweiten Stäbe (22) und der dritten Stäbe (23) verbinden.

13. Schirm (2) nach einem der vorhergehenden Ansprüche, wobei die aktive Drehverbindung (25), die die Paare von zweiten Stäben (22) und dritten Stäben (23) verbindet, wenigstens eines der folgenden Elemente umfasst:
- Metallbänder (25a) vom Typ Metallmaßband, die auf beiden Seiten der Stäbe (22, 23) jedes der Paare von zweiten Stäben (22) und dritten Stäben (23) eine Schiene bilden,
- eine Torsionsfeder (25b), oder
- einen Motor.

14. Schirm (2) nach einem der vorhergehenden Ansprüche, wobei die gespeicherte Energie mit einer Torsion oder Biegung der aktiven Drehverbindungen (25) in der gelagerten Konfiguration verbunden ist und die aktiven Drehverbindungen (25) eine Gleichgewichtsposition erreichen, wenn sich der Schirm (2) in der entfalteten Konfiguration befindet.

15. Schirm (2) nach einem der vorhergehenden Ansprüche, wobei die aktiven Drehverbindungen der dritten Stäbe (23) eine erste Energiemenge (Q1) speichern und die aktiven Drehverbindungen der zweiten Stäbe (22) eine zweite Energiemenge (Q2) speichern, und wobei der Übergang von der gelagerten Konfiguration zur entfalteten Konfiguration durch eine Freisetzung der ersten Energiemenge (Q1) und der zweiten Energiemenge (Q2) ausgelöst wird, die eine der Entfaltungssequenzen bewirkt, darunter:
- eine Entfaltung des Schirms (2) in axialer Richtung (z), gefolgt von einer Entfaltung des Schirms (2) in radialer Richtung (r, Θ),
- eine Entfaltung des Schirms (2) in radialer Richtung (r, Θ), gefolgt von einer Entfaltung des Schirms (2) in axialer Richtung (z), und
- eine gleichzeitige Entfaltung des Schirms (2) in radialer (r, Θ) und axialer (z) Richtung,
abhängig wenigstens von:
- einer Differenz zwischen der ersten Energiemenge (Q1) und der zweiten Energiemenge (Q2), und/oder
- einem Zeitversatz zwischen der Freisetzung der ersten Energiemenge (Q1) und der zweiten Energiemenge (Q2).

16. System, umfassend wenigstens eine Raumausrüstung (1) und einen entfaltbaren Schutzschild (2) nach einem der vorhergehenden Ansprüche.

17. System nach Anspruch 16, wobei die Raumausrüstung (1) ein entfaltbares Teleskop ist, das entfaltbare Blätter umfasst, die wenigstens einen entfaltbaren Hauptspiegel und einen entfaltbaren Sekundärspiegel bilden.

18. System nach einem der Ansprüche 16 und 17, umfassend ferner eine Starthaltevorrichtung, die mit Stäben (21, 22, 23) des Schirms (2) verbunden und dazu ausgebildet ist, sich von den Stäben (21, 22, 23) trennen zu können, um dem Schirm (2) zu ermöglichen, durch Freisetzung gespeicherter Energie eine entfaltete Konfiguration anzunehmen.

19. System nach Anspruch 18, wobei die Starthaltevorrichtung mit mehreren ersten Stäben (21) verbunden ist, die in einer axialen Richtung (z) übereinander angeordnet sind.

## Claims

1. Deployable sun-protection screen (2) for a piece of space equipment (1), having at least one area of attachment to a platform (31) of a spacecraft (3) including said piece of space equipment (1), said screen (2) being configured to switch from a stored configuration to a deployed configuration in orbit and **characterised in that** it comprises:
-- rods,
-- rotary links (24, 25) joining rods (21, 22, 23) to one another, the rotary links being of the active rotary link (25) type storing an amount of energy or of the passive rotary link (24) type, the rods (21, 22, 23) being covered by a thermally insulating film (20) folded when the screen (2) is in stored configuration and stretched between the rods (21, 22, 23) when the screen (2) is in deployed configuration,
wherein the rods consist of at least:
-- first structural rods (21), forming a peripheral structural base in stored configuration as well as in deployed configuration,
-- second radial extension rods (22), connected to one another at least in pairs to form sets of second rods, each set of second rods (22) connecting two consecutive first rods (21) and being configured to deploy the screen (2) in a radial direction (r, Θ),
-- third axial extension rods (23), connected to one another at least in pairs to form sets of third rods, each set of third rods (23) connecting two consecutive first rods (21) and being configured to deploy the screen (2) in an axial direction (z) and
-- each set of second rods (22) or third rods (23) comprising at least one active rotary link (25),
said sets of second rods (22) and third rods (23) being folded when the screen (2) is in stored configuration, the active rotary links (25) being configured to unfold said set of second rods (22) and third rods (23) and trigger the transition from the stored configuration to the deployed configuration, by driving the rotation of the passive rotary links (24) and a deployment in an axial direction and in a radial direction.

2. Screen (2) according to claim 1, wherein the first rods (21) are distributed in stages in the axial direction (z), each stage comprising the same number of first rods (21), greater than or equal to three.

3. Screen (2) according to claim 2, having at least three separate stages, wherein said stages are spaced apart from one another by the third rods (23) during the deployment of the screen (2) in the axial direction (z).

4. Screen (2) according to one of claims 2 and 3, wherein, at each stage, two consecutive first rods (21) are connected by said sets of second rods (22), while two first rods (21) of two successive stages are connected by said sets of third rods (23).

5. Screen (2) according to claim 4, wherein, in the deployed configuration, the first rods (21) and the second rods (22) of the same stage form a planar polygonal structure, this planar polygonal structure being present at a plurality of the stages.

6. Screen (2) according to one of claims 2 to 5, wherein, in the deployed configuration, the stages extend parallel to the same plane (x, y).

7. Screen (2) according to one of claims 2 to 4, wherein the area of attachment to the platform (31) of the spacecraft (3) comprises rotary links connected to sets of third rods (23), said sets of third rods (23) connecting first rods (21) to first attachment rods (21') in contact with said platform (31).

8. Screen (2) according to one of the preceding claims, wherein the rotary links (24, 25) are disposed exclusively at the ends of the rods (21, 22, 23).

9. Screen (2) according to one of the preceding claims wherein, in the stored configuration and in the deployed configuration, the rods (21, 22, 23) are disposed to form a closed structure in the radial direction (r, Θ) capable of surrounding the piece of space equipment (1).

10. Screen (2) according to claim 9, wherein a volume formed by said closed structure increases both when the screen (2) is deployed in the radial direction (r, Θ) and when the screen (2) is deployed in the axial direction (z).

11. Screen (2) according to one of the preceding claims, wherein the second rods (22) and the third rods (23) are connected respectively in pairs, and:
- in the stored configuration, the two third rods (23) of each pair of third rods (23) form the same first angle (Θ₁) and the second rods (22) of each of the pairs of second rods (22) form the same second angle (Θ₂), said first angle (Θ₁) and second angle (Θ₂) being between 0 and 180 degrees, and
- in the deployed configuration, the two third rods (23) of each of the pairs of third rods (23) extend parallel to the axial direction (z) and the two second rods (22) of each of the pairs of second rods (22) extend parallel to the same plane (x, y).

12. Screen (2) according to one of the preceding claims, wherein at least one passive rotary link (24) comprises at least two separate pivot links connecting at least three rods from the first rods (21), the second rods (22) and the third rods (23).

13. Screen (2) according to one of the preceding claims, wherein the active rotary link (25) connecting said pairs of second rods (22) and third rods (23) comprises at least one from at least:
- metal strips (25a), of the metal tape measure type, forming a rail on either side of the rods (22, 23) of each of said pairs of second rods (22) and third rods (23),
- a torsion spring (25b), or
- a motor.

14. Screen (2) according to any one of the preceding claims, wherein the stored energy is connected to a torsion or a flexion of the active rotary links (25) in the stored configuration and said active rotary links (25) reach a balanced position when the screen (2) is in the deployed configuration.

15. Screen (2) according to any one of the preceding claims, wherein the active rotary links of the third rods (23) storing a first amount of energy (Q1) and the active rotary links of the second rods (22) storing a second amount of energy (Q2), and wherein the transition from the stored configuration to the deployed configuration is triggered by a release of the first amount of energy (Q1) and of the second amount of energy (Q2) leading to one of the deployment sequences from:
- the deployment of the screen (2) in the axial direction (z) followed by the deployment of the screen (2) in the radial direction (r, Θ),
- the deployment of the screen (2) in the radial direction (r, Θ) followed by the deployment of the screen (2) in the axial direction (z), and
- the deployment of the screen (2) in the radial direction (r, Θ) and in the axial direction (z) concurrently,
depending on at least:
- one difference between the first amount of energy (Q1) and the second amount of energy (Q2), and/or
- one time delay between the release of the first amount of energy (Q1) and of the second amount of energy (Q2).

16. System comprising at least one piece of space equipment (1) and a deployable protective screen (2) according to any one of the preceding claims.

17. System according to claim 16, wherein the piece of space equipment (1) is a deployable telescope comprising deployable petals forming at least one deployable main mirror and a secondary deployable mirror.

18. System according to one of claims 16 and 17 further comprising a launch holding device connected to rods (21, 22, 23) of the screen (2) and configured to be able to separate from the rods (21, 22, 23) to make it possible for the screen (2) to adopt a deployed configuration by a release of stored energy.

19. System according to claim 18, wherein the launch holding device is connected to a plurality of first rods (21) superimposed in an axial direction (z).
